# EUROPEAN PATENT APPLICATION

(11) **EP 4 524 117 A1**
(43) Date of publication of application: **19.03.2025**
(21) Application number: 24200031.3
(22) Date of filing: 12.09.2024
(51) Int. Cl.: C03C 3/062, C03B 1/00

(54) **LOW-MELTING GLASS COMPOSITIONS, ARTICLES, AND METHODS OF MAKING THE SAME**

(30) Priority: 12.09.2023 US 202363582033 P; 09.09.2024 US 202418828327
(71) Applicant: The Penn State Research Foundation, University Park, PA 16802 (US)
(72) Inventor: Clark, Nicholas, University Park, 16802 (US); Traugh, Shaylee, University Park, 16802 (US); Astle, Sierra, University Park, 16802 (US); Mauro, John Christopher, University Park, 16802 (US); Mancini, Matthew Francis Lane, University Park, 16802 (US); Cook, Glen Bennett, University Park, 16802 (US); Gallagher, Colleen Elizabeth, University Park, 16802 (US); Reed, Titus, University Park, 16802 (US)
(74) Representative: Schaafhausen, Anne

(57) **Abstract**

Glass compositions, which can provide glass that can be formed with a reduced carbon footprint. Some embodiments of the glass can include between about 1.5 mole percent (mol%) alumina (Al₂O₃) and 5 mol% Al₂O₃ and between 5 mol% silica (SiO₂) and 45 mol% SiO₂ and between 35 mol% phosphorus pentoxide (P₂O₅) and 50 mol% of P₂O₅. Embodiments can also include modifiers. Embodiments can also include coloration agents or other elements. The glass compositions can be used to make different types of glass articles.

## Description

### TECHNICAL FIELD

The present invention generally relates to novel low-melt glass compositions, glass articles comprising the same, and methods of making the same.

### BACKGROUND

Millions of years ago, homo sapiens discovered the usefulness of naturally occurring glasses. Humans learned how to manufacture glass articles more than 5,000 years ago. The modern utility of glass is very diverse and includes both commercial and consumer use. Glass is commonly used for commodity applications and technological applications related to the automotive industry, electronic industry, spectroscopy, and the like. Often glass articles are also exposed to various chemical environments, and to ensure the article's durability in the long term, glass compositions need to be designed to withstand such environments. For example, glass articles such as container glasses, flat glasses for windows, automotive windshields, laser host materials, fibers, tubing, and the like, are employed in both commodity applications such as bottles, vases, art and craft glass objects, and the like, often endure the environmental attack of moisture and can lose their initial properties as a result. Thus, there is a need for glass compositions and articles comprising the same capable of withstanding exposure to moisture without losing their desired physical and chemical properties.

Also, it is known that glass produces significant carbon contribution to atmospheric conditions through manufacture. The use of long-duration high-heat formation processes leads to this carbon contribution. Glass articles commonly require heat of approximately 1,450 degrees Celsius for melting and formation processes. Accordingly, a need exists for alternative glass compositions which may be used to produce glass articles that can be formed at lower temperatures, thereby reducing the overall carbon contribution of glass manufacture to the environment.

These needs and other needs are at least partially satisfied by the present disclosure.

### SUMMARY

We have surprisingly found that glass compositions can be made with a significantly lower carbon footprint and at significantly lower temperatures. The formed glass can be utilized to form glass articles (e.g., jars, bottles, glasses, drinkware, windows, etc.). In some embodiments, a glass composition can include between about 1.5 mole percent (mol%) alumina (Al₂O₃) and 5 mol% Al₂O₃ and between 5 mol% silica (SiO₂) and 45 mol% SiO₂. For example, a glass composition can include between 1.5 mol% mol% Al₂O₃ and 4 mol% Al₂O₃ or can include between 2 mol% Al₂O₃ and 3.6 mol% Al₂O₃ or can include between 2.8 mol% Al₂O₃ and 3.3 mol% Al₂O₃. In such exemplary embodiments, the silica content can range from between 5 mol% silica (SiO₂) and 15 mol% SiO₂ (e.g., can be between 5 mol% SiO₂ and 10 mol% SiO₂, be between 5 mol% SiO₂ and 12 mol% SiO₂, or be between 7 mol% SiO₂ and 15 mol% SiO₂, etc.).

Embodiments of the glass composition can also include phosphorus pentoxide (P₂O₅). Phosphorus pentoxide can be added to the glass composition by use of phosphate compounds for the forming of the glass having the glass composition. For instance, monosodium phosphate (which can also be referred to as sodium hexametaphosphate), monopotassium phosphate, monocalcium phosphate, aluminum metaphosphate, dimagnesium phosphate and/or other suitable sources of phosphorous pentoxide can be added to the glass raw materials to be used to form the glass so that the glass has a glass composition with a desired content of P₂O₅ (e.g., a content of P₂O₅ that is within a pre-selected compositional range for P₂O₅ or at a pre-selected P₂O₅ content). Use of these types of phosphate compounds can permit the glass to be formed without use of carbonate modifiers (e.g., CaCOs, Na₂CO₃, etc.) to help reduce the direct carbon footprint for the raw materials used for making the glass having a pre-selected desired glass composition. In some embodiments, the glass composition can include between less than 55 mol% P₂O₅ and greater than 35 mol% P₂O₅. For instance, the glass composition can include a P₂O₅ content of between 38 mol% P₂O₅ and 50 mol% P₂O₅ or a P₂O₅ content of between 40 mol% P₂O₅ and 45 mol% P₂O₅.

For example, some embodiments of the glass composition can include between 5 mol% SiO₂ and 10 mol% SiO₂, between 2.8 mol% Al₂O₃ and 3.3 mol% Al₂O₃ and between 40 mol% P₂O₅ and 45 mol% P₂O₅. Other embodiments can utilize other combinations of content ranges of SiO₂, Al₂O₃ and P₂O₅ as discussed herein (e.g., as discussed above or discussed below).

Embodiments of the glass composition can also include other components. For example, embodiments of the glass composition can also include one or more modifiers. Examples of modifiers can include alkali modifiers, alkaline earth modifiers, and transition metal modifiers. For example, the modifiers can include calcium oxide (CaO), magnesium oxide (MgO), zinc oxide (ZnO), sodium oxide (Na₂O), iron oxide (Fe₂O₃) and/or potassium oxide (K₂O). In some embodiments, the glass composition can include a total content of the modifiers in a range of between 40 mol% and 47 mol% (e.g., the entire sum content of all such modifiers included in the glass composition can range between 40 mol% and 47 mol%). In other embodiments, the glass composition can include a total content of the modifiers in a range of between 30 mol% and 40 mol% or around 35 mol% (e.g., the entire sum content of all such modifiers included in the glass composition can range between 30 mol% and 40 mol% or be between 33 mol% and 37 mol%, etc.).

One or more modifiers can be included in the glass composition to help provide one or more properties for the glass composition, which can help the glass be more effective for use in making a particular type of article. For instance, CaO and/or K₂O can be utilized as modifiers to help improve the durability of glass having the glass composition. Glass compositions that may have a relatively low Al₂O₃ content, can have a higher CaO content and/or a higher content of K₂O, for example. In some embodiments, the glass composition can have a CaO content of 22 mol% CaO or greater than 22 mol% CaO (and no more than 47 mol% CaO).

In some embodiments, K₂O can be less than or equal to 10 mol% in the glass composition. In such a range, the glass can be clear (e.g., avoid opacity) and we have found that this type of composition range can help avoid phase separation.

In some embodiments, Na₂O can preferably be no more than 20 mol% of the glass composition. We have found that a Na₂O content of over 20 mol% can result in the glass being opaque and/or being degradable at ambient conditions in some situations.

MgO, ZnO, and/or CaO can be utilized in the glass composition to help provide a glass that is transparent and durable. For instance, inclusion of CaO can help increase the Vickers hardness of the glass having the glass composition. We have found that glass compositions that were divalent-free often resulted in formation of opaque glass or glass that may degrade in air or in ambient conditions so many preferred embodiments can include one or more divalent modifiers.

We have also found that modifiers that have relatively high field strength (e.g., Na₂O, MgO, and ZnO) can help provide high crack resistance to the glass having the glass composition. In contrast, the inclusion of CaO and/or K₂O can reduce the crack resistance for the glass composition. For embodiments of the glass composition in which a high crack resistance is desired, the glass composition can preferably have about 10 mol% CaO (e.g., between 8 mol% CaO and 12 mol% CaO), and between 15 mol% and 30 mol% ZnO and/or MgO (e.g., the content of ZnO and MgO can total between 15 mol% and 30 mol%).

The modifiers can be selected to help with coloration and other qualities as well. For example, the alkali content of the glass composition in some embodiments can be no more than 14 mol% alkali to help avoid phase separation and avoid a glass that may be blue (e.g., sky blue) or white in color. Having an alkali content of around 10 mol% in some embodiments can permit the glass to be compatible with various electrical resistance melting techniques used for making the glass. Examples of alkali modifiers include Na₂O and K₂O.

Iron oxide (Fe₂O₃), can be utilized in a relatively small amount as a modifier to help raise durability and increase liquidus viscosity without detrimentally affecting clarity of the formed glass or processability of the glass. Some embodiments of the glass composition can include greater than 0 mol% Fe₂O₃ and less than 0.5 mol% Fe₂O₃.

The inclusion of ZnO and MgO can have similar effects on properties of glass having the glass composition. Both of these modifiers can be substituted in place of other modifiers (e.g., CaO) to help increase crack resistance and alter durability. For example, in some embodiments, there can be a higher MgO content and no ZnO in the glass composition. In other embodiments, there can be a higher MgO content and a low ZnO content in the glass composition. In yet other embodiments, there can be a pre-selected MgO content and a relatively low ZnO content.

A higher alkali modifier content and lower alkali earth modifier content can result in a higher thermal expansion coefficient for the glass as compared to glass having a lower alkali modifier content and a greater alkali earth modifier content. The combination of which modifiers to utilize for a particular application can be refined within the above noted content ranges to provide a desired glass composition for a glass article that can have a desired thermal expansion coefficient for a particular application (e.g., use in forming a particular type of article).

In some embodiments, a glass composition that includes the modifiers and P₂O₅ can be a glass composition having between 9 mol% and 10 mol% SiO₂ (e.g., 9.4-9.5 mol% SiO₂), between 40 mol% and 42 mol% P₂O₅ (e.g., 41.5-42 mol% P₂O₅), between 2.8 mol% and 3.2 mol% Al₂O₃ (e.g., 2.85-3 mol% Al₂O₃), between 24.5 mol% and 26 mol% CaO (e.g., 24.7-25.3 mol% CaO), between 2.7 mol% and 3.0 mol% MgO (e.g., 2.8-2.9 mol% MgO), between 8.4 mol% and 8.7 mol% ZnO (e.g., 8.5-8.8 mol% ZnO), between 8.2 mol% and 8.8 mol% Na₂O (e.g., 8.4-8.6 mol% Na₂O), and between 1.0 mol% and 1.3 mol% K₂O (e.g., 1.08-1.2 mol% K₂O). As another example, an embodiment of the glass composition can include 9.46 mol% SiO₂, 41.76 mol% P₂O₅, 2.89 mol% Al₂O₃, 24.90 mol% CaO, 2.83 mol% MgO, 8.52 mol% ZnO, 8.51 mol% Na₂O, and 1.13 mol% K₂O.

As yet another example, the glass composition that includes the modifiers and P₂O₅ can be a glass composition having between 8 mol% and 11 mol% SiO₂ (e.g., 9.4-9.5 mol% SiO₂), between 40 mol% and 42 mol% P₂O₅ (e.g., 41.5-42 mol% P₂O₅), between 2.7 mol% and 3.4 mol% Al₂O₃ (e.g., 2.85-3 mol% Al₂O₃), between 24 mol% and 26 mol% CaO (e.g., 24.7-25.3 mol% CaO), and between 15 mol% and 30 mol% MgO. Some such embodiments can also include between 8. mol% and 9 mol% Na₂O (e.g., 8.4-8.6 mol% Na₂O), and between 1.0 mol% and 1.5 mol% K₂O (e.g., 1.08-1.2 mol% K₂O). As yet another example, the glass composition that includes the modifiers and P₂O₅ can be a glass composition having between 8 mol% and 11 mol% SiO₂ (e.g., 9.4-9.5 mol% SiO₂), between 40 mol% and 42 mol% P₂O₅ (e.g., 41.5-42 mol% P₂O₅), between 2.7 mol% and 3.4 mol% Al₂O₃ (e.g., 2.85-3 mol% Al₂O₃), between 15 mol% and 26 mol% CaO (e.g., 24.7-25.3 mol% CaO), between 15 mol% and 30 mol% MgO and no more than 5 mol% ZnO (e.g. 0-5 mol% ZnO, less than 3 mol% ZnO and more than 0 mol% ZnO, etc.).

As yet another example, an embodiment of the glass composition including modifiers can have 9.46 mol% SiO₂, 41.76 mol% P₂O₅, 3.2 mol% Al₂O₃, 24.90 mol% CaO, 2.83 mol% MgO, 8.52 mol% ZnO, 8.51 mol% Na₂O, and 1.13 mol% K₂O. As yet another example, an embodiment of the glass composition including the modifiers can have 9.46 mol% SiO₂, 41.76 mol% P₂O₅, 2.8 mol%-3.2 mol% Al₂O₃, 24.90 mol% CaO, 2.83 mol% MgO, 8.52 mol% ZnO, 8.51 mol% Na₂O, and 1.13 mol% K₂O. As yet another example, an embodiment of the glass composition including the modifiers can have 9.46 mol% SiO₂, 39.0 mol%- 42.39 mol% P₂O₅, 2.09 mol%-3.0 mol% Al₂O₃, 25.28 mol% CaO, 9.71 mol% MgO, 1.18 mol% ZnO, 8.58 mol% Na₂O, and 1.32 mol% K₂O. As yet another example, an embodiment of the glass composition including modifiers can have 9.46 mol% SiO₂, 41.76 mol% P₂O₅, 2.8 mol%-3.2 mol% Al₂O₃, 24.90 mol% CaO, 11.33 mol% MgO, 8.51 mol% Na₂O, and 1.13 mol% K₂O. As yet another example, an embodiment of the glass composition including modifiers can have 9-11 mol% SiO₂, 39-43 mol% P₂O₅, 2.5 mol%-3.8 mol% Al₂O₃, 15-25 mol% CaO, 11-30 mol% MgO, 4-8 mol% Na₂O, and 0.5-1.5 mol% K₂O.

In some embodiments, it is contemplated that a higher amount of Al₂O₃ may be desired to facilitate a desired melt condition or a desired mechanical property (e.g. improved stability, etc.). In such embodiments, the glass composition can include, for example, 5-22 mol% Al₂O₃. For instance, some embodiments of the glass composition can include about 25 mol% to about 55 mol% of P₂O₅; about 5 mol% to about 45 mol% of SiO₂; about 5 mol% to about 22 mol% of Al₂O₃; about 5 mol% to about 30 mol% of ZnO; greater than 0 to about 20 mol% a total amount of Na₂O, K₂O, and/or lithium oxide (Li₂O); about 2 mol% to about 8 mol% of CaO, and/or about 2 mol% to about 8 mol% of MgO.

Other embodiments can have other types of glass compositions. For example, a glass composition comprising: about 35 mol% to about 50 mol% (e.g., 35-50 mol%) of P₂O₅; about 5 mol% to about 15 mol% (e.g., 5-15 mol%) of SiO₂; about 2 mol% to about 10 mol% (e.g., 2-10 mol%) of Al₂O₃; and about 30 mol% to about 50 mol% (e.g., 30-50 mol%) of a total amount of CaO, MgO, and ZnO can be provided for some embodiments.

Yet other embodiments of the glass composition can have about 25 mol% to about 55 mol% (e.g., 25-55 mol%) of P₂O₅; about 5 mol% to about 45 mol% (e.g., 5-45 mol%) of SiO₂; about 5 mol% to about 22 mol% (e.g., 5-22 mol%) of Al₂O₃; about 5 mol% to about 30 mol% (e.g., 5-30 mol%) of ZnO; greater than 0 mol% to about 20 mol% (e.g., greater than 0 mol% to 20 mol%) of a total amount of Na₂O, K₂O, and/or Li₂O; about 2 mol% to about 8 mol% (e.g., 2-8 mol%) of CaO, and/or about 2 mol% to about 8 mol% (e.g., 2-8 mol%) of MgO.

While yet in other aspects, when the glass composition disclosed herein exhibits a melting point of less than about 1,400 °C.

In still further, the glass composition disclosed herein can comprise Fe₂O₃ in an amount up to about 10 mol%.

Also disclosed herein is an article comprising a glass composition comprising about 25 mol% to about 55 mol% of P₂O₅; about 5 mol% to about 45 mol% of SiO₂; about 5 mol% to about 22 mol% of Al₂O₃; about 5 mol% to about 30 mol% of ZnO; greater than 0 mol% to about 20 mol% a total amount of Na₂O, K₂O, and/or Li₂O; about 2 mol% to about 8 mol% of CaO, and/or about 2 mol% to about 8 mol% of MgO.

In still further aspects, the articles disclosed herein can comprise foodware, tableware, cookware, flat glass, windows, windshields, hollowware, jars, art and craft glass objects, laser host materials, optical fibers, hollow fibers, tubing fibers, lab-usable containers, or any combination thereof.

Also disclosed herein are methods comprising: a) providing: about 25 to about 55 mol% of P₂O₅; about 5 to about 45 mol% of SiO₂; about 5 to about 22 mol% of Al₂O₃; about 5 to about 30 mol% of ZnO; greater than 0 to about 20 mol% a total amount of Na₂O, K₂O, and/or Li₂O; about 2 to about 8 mol% of CaO, and/or about 2 to about 8 mol% of MgO; b) forming a homogeneous mixture; c) melting the mixture at a temperature of about 1,000 °C to about 1,300 °C; and cooling the composition to form any of the disclosed herein glass compositions.

Also disclosed herein are methods of forming an article comprising forming any of the disclosed above compositions. In still further aspects, the methods disclosed herein can exhibit at least about 25% reduction in CO₂ emission as compared to a reference method of making a conventional soda-lime glass composition.

In still further aspects, the glass composition is substantially free of alkali oxides. Yet in other aspects, the glass composition comprises up to 10 mol% of a total amount of alkali oxides.

In still further aspects, the glass composition disclosed herein is substantially free of ZnO.

Yet in still further aspects, the glass composition exhibits a melting point of less than about 1,300 °C.

Some embodiments can be formulated so the formed glass is clear. Other formed glass can be colored via at least one coloring agent or additive.

Also disclosed herein is an article comprising a glass composition can be provided that has any of the above noted compositions for the glass of the article. For example, the glass of the article can include about 35 mol% to about 50 mol% of P₂O₅; about 5 mol% to about 15 mol% of SiO₂; about 5 mol% to about 10 mol% of Al₂O₃; and about 30 mol% to about 50 mol% of a total amount of CaO, MgO, and ZnO. As another example, the glass composition of the glass of the article can have between 9 mol% and 10 mol% SiO₂ (e.g., 9.4-9.5 mol% SiO₂), between 40 mol% and 42 mol% P₂O₅ (e.g., 41.5-42 mol% P₂O₅), between 2.8 mol% and 3.2 mol% Al₂O₃ (e.g., 2.85-3 mol% Al₂O₃, between 24.5 mol% and 26 mol% CaO (e.g., 24.7-25.3 mol% CaO), between 2.7 mol% and 3.0 mol% MgO (e.g., 2.8-2.9 mol% MgO), between 8.4 mol% and 8.7 mol% ZnO (e.g., 8.5-8.8 mol% ZnO), between 8.2 mol% and 8.8 mol% Na₂O (e.g., 8.4-8.6 mol% Na₂O), and between 1.0 mol% and 1.3 mol% K₂O (e.g., 1.08-1.2 mol% K₂O).

In still further aspects, the articles disclosed herein can comprise foodware, tableware, cookware, flat glass, windows, windshields, hollowware, jars, art and craft glass objects, laser host materials, optical fibers, hollow fibers, tubing fibers, lab-usable containers, or any combination thereof.

Also disclosed herein are methods comprising: a) providing raw materials for making glass to have one or more of the above noted glass compositions or other glass composition that is disclosed herein, b) forming a homogeneous mixture; c) melting the mixture at a temperature of about 1,000 °C to about 1,300 °C; and cooling the composition to form any of the disclosed herein glass compositions.

Also disclosed herein are methods of forming an article comprising forming any of the disclosed above compositions. Some embodiments of the method can be implemented to provide about a 15%-25% reduction in CO₂ emission as compared to a reference method of making a conventional soda-lime glass composition. Also, the carbon footprint of the raw material of the glass that may be used to form the glass or glass article can be low.

Additional aspects of the disclosure will be set forth, in part, in the detailed description, figures, and claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF DRAWINGS

**Figure 1** (also referred to as FIG. 1) is a graph depicting the absorption spectrum of an exemplary glass composition according to one exemplary aspect.
**Figures 2A-2D** (also referred to as FIG. 2A, FIG. 2B, FIG. 2C, and FIG. 2D) are graphs that show the relaxation behavior of an exemplary embodiment of a glass composition according to one exemplary embodiment. **Fig. 2A** is a graph illustrating a stretching parameter beta (β) evaluation, **Fig. 2B** is a graph illustrating a viscosity evolution, **Fig. 2C** is a graph illustrating a relaxation time evolution, and **Fig. 2D** is a graph illustrating a thermal history of simulation.
Figures 3 and 4 (also referred to as FIG. 3 and FIG. 4) are tables illustrating exemplary embodiments of glass compositions. FIG. 3 includes a table illustrating exemplary embodiments of glass compositions and FIG. 4 is a table that illustrates exemplary embodiments of glass compositions.
Figure 5 (also referred to as FIG. 5) is a graph illustrating the probability of crack initiation (PCI) as a function of load for a glass having the composition of the exemplary embodiment of the glass composition identified as "Glass1" in Table 2 and a conventional soda-lime glass.
Figure 6 (also referred to as FIG. 6) is a series of photographs showing example indents made in a glass having the composition of the exemplary embodiment of the glass composition identified as "Glass1" in Table 2 in images (a), (b), and (c) in Figure 6 and in a conventional soda-lime glass in the images (d), (e), and (f) in Figure 6. The load applied for the images (a) and (d) in Figure 6 was 1kgf, the load applied for images (b) and (e) in Figure 6 was 0.5 kgf and the load applied for the images (c) and (f) in Figure 6 was 0.1 kgf.
Figure 7 (also referred to herein as FIG. 7) is a graph that shows how coefficient of thermal expansion (CTE) varies as a function of temperature for several exemplary embodiments of glass compositions compared to a conventional soda-lime glass (SLS).

### DETAILED DESCRIPTION

The present invention can be understood more readily by reference to the following detailed description, examples, drawings, and claims, and their previous and following description. However, before the present articles, systems, and/or methods are disclosed and described, it is to be understood that this invention is not limited to the specific or exemplary aspects of articles, systems, and/or methods disclosed unless otherwise specified, as such can, of course, vary. It is also to be understood that the terminology used herein is for the purpose of describing particular aspects only and is not intended to be limiting.

The following description of the invention is provided as an enabling teaching of the invention in its best, currently known aspect. To this end, those skilled in the relevant art will recognize and appreciate that many changes can be made to the various aspects of the invention described herein while still obtaining the beneficial results of the present invention. It will also be apparent that some of the desired benefits of the present invention can be obtained by selecting some of the features of the present invention without utilizing other features. Accordingly, those of ordinary skill in the pertinent art will recognize that many modifications and adaptations to the present invention are possible and may even be desirable in certain circumstances and are a part of the present invention. Thus, the following description is again provided as illustrative of the principles of the present invention and not in limitation thereof.

### DEFINITIONS

As used herein, the singular forms "a," "an," and "the" include plural referents unless the context clearly dictates otherwise. Thus, for example, reference to an "article" includes aspects having two or more such articles unless the context clearly indicates otherwise.

It is appreciated that certain features of the disclosure, which are, for clarity, described in the context of separate aspects, can also be provided in combination in a single aspect. Conversely, various features of the disclosure, which are, for brevity, described in the context of a single aspect, can also be provided separately or in any suitable combination.

As used herein, the terms "optional" or "optionally" mean that the subsequently described event or circumstance may or may not occur, and that the description includes instances where said event or circumstance occurs and instances where it does not.

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this invention belongs. In this specification and in the claims, which follow, reference will be made to a number of terms that shall be defined herein.

For the terms "for example" and "such as" and grammatical equivalences thereof, the phrase "and without limitation" is understood to follow unless explicitly stated otherwise.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Furthermore, when numerical ranges of varying scope are set forth herein, it is contemplated that any combination of these values inclusive of the recited values may be used. Further, ranges can be expressed herein as from "about" one particular value and/or to "about" another particular value. When such a range is expressed, another aspect includes from the one particular value and/or to the other particular value.

Similarly, when values are expressed as approximations, by use of the antecedent "about," it will be understood that the particular value forms another aspect. It will be further understood that the endpoints of each of the ranges are significant both in relation to the other endpoint and independently of the other endpoint. Unless stated otherwise, the term "about" means within 5% (e.g., within 2% or 1%) of the particular value modified by the term "about."

Throughout this disclosure, various aspects of the invention can be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, a description of a range such as from 1 to 6 should be considered to have specifically disclosed subranges such as from 1 to 3, from 1 to 4, from 1 to 5, from 2 to 4, from 2 to 6, from 3 to 6, etc., as well as individual numbers within that range, for example, 1, 2, 2.7, 3, 4, 5, 5.3, 6 and any whole and partial increments therebetween. This applies regardless of the breadth of the range.

As used herein, the term "composition" is intended to encompass a product comprising the specified ingredients in the specified amounts, as well as any product which results, directly or indirectly, from a combination of the specified ingredients in the specified amounts. It is understood that the term "glass composition," as disclosed herein, refers to a glass that was melted to form a defined composition but before it was formed into a specific glass article. It is further understood that the glass composition as used herein is not the same as batch ingredients that were introduced into the mix before forming the glass. In some aspects, the batch ingredients used to form the composition can comprise elements that the glass composition is substantially free of.

A weight percent (wt.%) of a component, unless specifically stated to the contrary, is based on the total weight of the formulation or composition in which the component is included. In the aspects where the glass compositions are described, the concentration of constituent components (e.g., SiO₂, Al₂O₃, B₂O₃, CuO, NiO, and the like) are given in a mole percent (mol%) on an oxide basis, unless otherwise specified.

As used herein, the term "substantially" means that the subsequently described event or circumstance completely occurs or that the subsequently described event or circumstance generally, typically, or approximately occurs.

Still further, the term "substantially" can, in some aspects, refer to at least about 80 %, at least about 85 %, at least about 90 %, at least about 91 %, at least about 92 %, at least about 93 %, at least about 94 %, at least about 95 %, at least about 96 %, at least about 97 %, at least about 98 %, at least about 99 %, or about 100 % of the stated property, component, composition, or other condition for which substantially is used to characterize or otherwise quantify an amount.

In other aspects, as used herein, the term "substantially free," when used in the context of a composition or component of a composition that is substantially absent, is intended to indicate that the recited component is not intentionally batched and added to the composition but can be present as an impurity along with other components being added to the composition. In such aspects, the term "substantially free" is intended to refer to trace amounts that can be present in the batched components, for example, it can be present in an amount that is less than about 1 % by weight, e.g., less than about 0.5 % by weight, less than about 0.1 % by weight, less than about 0.05 % by weight, or less than about 0.01 % by weight of the stated material, based on the total weight of the composition.

As used herein, the term "substantially," in, for example, the context "substantially identical" or "substantially similar," refers to a method or a system, or a component that is at least about 90%, at least about 91%, at least about 92%, at least about 93%, at least about 94%, at least about 95%, at least about 96%, at least about 97%, at least about 98%, at least about 99%, or about 100% by similar to the method, system, or the component it is compared to.

It is further understood that the compositions disclosed herein are commonly expressed as oxides, however, it is understood that the specific elements can be present in an ionic state.

As used herein, the terms a glass transition temperature or T_{g} can be used interchangeably and is defined as the inflection point of a differential scanning calorimetry (DSC) curve during the second heating, where the cooling and heating of the sample occurs at a rate of 10 °C/min and is plotted as Heat Flow in mW vs. Temperature in °C.

As used herein, the term "melting point" refers to a temperature at which the batch materials fully melt to obtain a homogeneous liquid. By glass industry convention, the melting point occurs at a liquid viscosity of around 10-20 Pa·s.

The term "crack resistance" can refer to a force required for a 50% chance of a Vickers indent to produce corner cracks in the glass. Crack resistance can refer to the resistance to crack initiation and can be different from resistance to crack propagation (which is often called toughness).

Phase separation can refer to the process by which glass separates into two distinct liquids. Phase separation can result in glass being opaque.

Devitrification can refer to a process by which glass partially or completely crystallizes. Devitrification can occur when glass is held below a liquidus temperature for an extended period of time, for example. Devitrification can be apparent when there are crystals in the glass. A glass viscosity can be high enough below the liquidus temperature that crystals do not have enough time to nucleate during the forming process to avoid devitrification.

Field strength can refer to a ratio of the charge of the atom to its size. A high field strength species can have a high charge and a small size.

While aspects of the present invention can be described and claimed in a particular statutory class, such as the system statutory class, this is for convenience only and one of ordinary skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is in no way intended that an order be inferred in any respect. This holds for any possible non-express basis for interpretation, including matters of logic with respect to the arrangement of steps or operational flow, plain meaning derived from grammatical organization or punctuation, or the number or type of aspects described in the specification.

The present invention may be understood more readily by reference to the following detailed description of various aspects of the invention and the examples included therein and to the Figures and their previous and following description.

The present invention may be understood more readily by reference to the following detailed description of various aspects of the invention and the examples included therein and to the Figures and their previous and following description.

### COMPOSITIONS

In some aspects described herein is a glass composition comprising: about 25 to about 55 mol% of P₂O₅; about 5 to about 45 mol% of SiO₂; about 5 to about 22 mol% of Al₂O₃; about 5 to about 30 mol% of ZnO; greater than 0 to about 20 mol% a total amount of Na₂O, K₂O, and/or Li₂O; about 2 to about 8 mol% of CaO, and/or about 2 to about 8 mol% of MgO.

In yet other aspects, the glass composition can also comprise about 25 mol% to about 55 mol% of P₂O₅, including exemplary values of about 26 mol%, about 27 mol%, about 28 mol%, about 29 mol%, about 30 mol%, about 31 mol%, about 32 mol%, about 33 mol%, about 34 mol%, about 35 mol%, about 36 mol%, about 37 mol%, about 38 mol%, about 39 mol%, about 40 mol%, about 41 mol%, about 42 mol%, about 43 mol%, about 44 mol%, about 45 mol%, about 46 mol%, about 47 mol%, about 48 mol%, and about 49 mol%.

In still further aspects, the glass composition can comprise about 5 to about 45 mol% of SiO₂, including exemplary values of about 6 mol%, about 7 mol%, about 8 mol%, about 9 mol%, about 10 mol%, about 11 mol%, about 12 mol%, about 13 mol%, about 14 mol%, about 15 mol%, about 16 mol%, about 17 mol%, about 18 mol%, about 19 mol%, about 20 mol%, about 21 mol%, about 22 mol%, about 23 mol%, about 24 mol%, about 25 mol%, about 26 mol%, about 27 mol%, about 28 mol%, about 29 mol%, about 30 mol%, about 31 mol%, about 32 mol%, about 33 mol%, about 34 mol%, about 35 mol%, about 36 mol%, about 37 mol%, about 38 mol%, about 39 mol%, about 40 mol%, about 41 mol%, about 42 mol%, about 43 mol%, and about 44 mol%.

In yet further aspects, the glass composition can comprise about 5 to about 22 mol% of Al₂O₃, including exemplary values of about 6 mol%, about 7 mol%, about 8 mol%, about 9 mol%, about 10 mol%, about 11 mol%, about 12 mol%, about 13 mol%, about 14 mol%, about 15 mol%, about 16 mol%, about 17 mol%, about 18 mol%, about 19 mol%, about 20 mol%, and about 21 mol%.

In still further aspects, the glass composition can comprise about 5 to about 30 mol% of ZnO, including exemplary values of about 6 mol%, about 7 mol%, about 8 mol%, about 9 mol%, about 10 mol%, about 11 mol%, about 12 mol%, about 13 mol%, about 14 mol%, about 15 mol%, about 16 mol%, about 17 mol%, about 18 mol%, about 19 mol%, about 20 mol%, about 21 mol%, about 22 mol%, about 23 mol%, about 24 mol%, about 25 mol%, about 26 mol%, about 27 mol%, about 28 mol%, and about 29 mol%.

Also disclosed herein are the aspects where the glass composition comprises greater than 0 to about 20 mol% a total amount of Na₂O, K₂O, and/or Li₂O, including exemplary values of about 0.01 mol%, about 0.05 mol%, about 1 mol%, about 2 mol%, about 3 mol%, about 4 mol%, about 5 mol%, 6 mol%, about 7 mol%, about 8 mol%, about 9 mol%, about 10 mol%, about 11 mol%, about 12 mol%, about 13 mol%, about 14 mol%, about 15 mol%, 16 mol%, about 17 mol%, about 18 mol%, and about 19 mol%. It is understood that in some aspects, the glass composition can only comprise Na₂O in any of the mentioned above amounts. In still further aspects, the glass composition can only comprise Li₂O in any of the mentioned above amounts. In still further aspects, the glass composition can only comprise K₂O in any of the mentioned above amounts. Yet in still further aspects, the glass composition can comprise Na₂O and Li₂O, such that the total amount of Na₂O and Li₂O falls within the disclosed above ranges. Yet in still further aspects, the glass composition can comprise Na₂O and K₂O, such that the total amount of Na₂O and K₂O falls within the disclosed above ranges. Yet in still further aspects, the glass composition can comprise K₂O and Li₂O, such that the total amount of K₂O and Li₂O falls within the disclosed above ranges. Yet in still further aspects, the glass composition can comprise Na₂O, K₂O, and Li₂O, such that the total amount of Na₂O, K₂O, and Li₂O falls within the disclosed above ranges.

In yet still further aspects also disclosed the glass composition where CaO is present in an amount of about 2 mol% to about 8 mol%, including exemplary values of about 3 mol%, about 4 mol%, about 5 mol%, about 6 mol%, and about 7 mol%.

In yet still further aspects, the glass composition disclosed herein can also comprise about 2 mol% to about 8 mol% of MgO, including exemplary values of about 3 mol%, about 4 mol%, about 5 mol%, about 6 mol%, and about 7 mol%.

It is understood that in some aspects, the glass composition can comprise both CaO and MgO. While in other aspects, the glass composition can comprise either CaO or MgO in any of the disclosed above amounts.

In still further aspects, the glass composition disclosed herein is comparable in its characteristics and properties with the conventional soda-lime silicate glass while exhibiting superior melting properties. It is understood that the compositions of conventional soda-lime silicate glass are known. Generally, with some small deviations, the soda-lime silicate glasses comprise about 70-75 wt% of SiO₂, about 12-17 wt% of Na₂O, about 7-12 wt% of CaO, greater than 0 to about 2.5 wt % of Al₂O₃, greater than 0 to about 1.0 wt % of K₂O, greater than 0 to about 5 wt % of MgO, greater than 0 to about 0.15 wt % of Fe₂O₃, 0 to about 0.5 wt % of TiO₂, and in some instances 0 to about 0.5 wt % of SOs.

The melting point of the soda-lime silicate glass is known to be in a range of about 1,400 to about 1,450 °C. In certain aspects, the glass composition disclosed herein exhibits a melting point of at least about 50 °C, at least about 100 °C, at least about 150 °C, at least about 200 °C, at least about 250 °C, or at least about 300 °C less than the melting point of a conventional soda-lime silicate glass composition. In still further aspects, the glass composition disclosed herein exhibits a melting point of less than about 1,400 °C, less than about 1,350 °C, less than about 1,300 °C, less than about 1,250 °C, less than about 1,200 °C, less than about 1,150 °C, or less than about 1,000 °C.

Without wishing to be bound by any theory, it was observed that the glass composition having the disclosed range of phosphates allows for achieving the disclosed low melting point while maintaining sufficient chemical durability. In still further aspects, the disclosed range for silicates also was observed to allow sufficient chemical durability without the need for high melting temperatures. It is understood that sufficient chemical durability can be determined by the specific application. It is further understood that the actual durability can be dependent on the exact glass composition and the specific conditions it is exposed. For example, and without limitations, the condition can include the type of solvent the glass is present in, the solvent's pH, the presence of corrosive elements, temperature, and the like. The durability can be tailored to the specific application. For example, the glass compositions used to create artistic artifacts will have different sufficient chemical durability as compared to the articles used as tableware or cookware or labware. In still further aspects, the disclosed amount of alumina was found to be sufficient to maintain the melt conditions and sufficient chemical durability. The presence of alumina in the disclosed ranges can also impart additional mechanical stability to the glass.

In still further aspects, it was found that the disclosed amount of ZnO can also help improve the mechanical performance of the glass composition without substantially imparting coloration of the glass.

In yet further aspects, and again without wishing to be bound by any theory, it was hypothesized that including alkali and alkaline earth metals in the disclosed amounts can assist in the charge balance of alumina tetrahedra and further reduce the melting temperature of the disclosed glass composition.

In still further aspects, the disclosed herein glass compositions can further comprise iron oxides. In certain aspects, the glass composition can comprise up to about 10 mol% of Fe₂O₃, including exemplary amounts of about 0.01 mol%, about 0.05 mol%, about 0.1 mol%, about 0.5 mol%, about 1 mol%, about 1.5 mol%, about 2 mol%, about 2.5 mol%, about 3 mol%, about 3.5 mol%, about 4 mol%, about 4.5 mol%, about 5 mol%, about 5.5 mol%, about 6 mol%, about 6.5 mol%, about 7 mol%, about 7.5 mol%, about 8 mol%, about 8.5 mol%, about 9 mol%, and about 9.5 mol%.

In certain aspects, when Fe₂O₃ can be present up to about 0.5 mol%, including exemplary amounts of about 0.01 mol%, about 0.02 mol%, about 0.03 mol%, about 0.04 mol%, about 0.05 mol%, about 0.06 mol%, about 0.07 mol%, about 0.08 mol%, about 0.09 mol%, about 0.1 mol%, about 0.15 mol%, about 0.2 mol%, about 0.25 mol%, about 0.3 mol%, about 0.35 mol%, about 0.4 mol%, and about 0.45 mol%. In such exemplary and unlimiting aspects, the glass composition can be substantially color free.

In still further aspects, a specific color of glass composition can be determined spectroscopically. In some exemplary and unlimiting aspects, when the glass composition is substantially color free, such a composition exhibits an absorption coefficient average over the visible range of about 400 to about 800 nm, including the wavelength of about 450 nm, about 500 nm, about 550 nm, about 600 nm, about 650 nm, about 700 nm, and about 750 nm, of less than or equal to about 0.49 cm⁻¹, including exemplary values of less than or equal to about 0.45 cm⁻¹, less than or equal to about 0.4 cm⁻¹, less than or equal to about 0.35 cm⁻¹, less than or equal to about 0.3 cm⁻¹, less than or equal to about 0.25 cm⁻¹, and less than or equal to about 0.2 cm⁻¹.

In yet still further aspects, when the glass composition is substantially color-free, such a composition exhibits a percent transmittance greater than about 80%, greater than about 85%, greater than about 90%, greater than about 95%, or even greater than about 99% over a wavelength range of about 400 nm to about 800 nm, including wavelength about 450 nm, about 500 nm, about 550 nm, about 600 nm, about 650 nm, about 700 nm, and about 750 nm.

Yet in still other aspects, when Fe₂O₃ is present in amount of about 0.5 to about 5 mol%, including exemplary amounts of about 0.6 mol%, about 0.6 mol%, about 0.8 mol%, about 0.9 mol%, about 1 mol%, about 1.5 mol%, about 2 mol%, about 2.5 mol%, about 3 mol%, about 3.5 mol%, about 4 mol%, and about 4.5 mol%, such a composition can be translucent grey.

In still further aspects, the composition can also comprise other valencies of iron oxides, for example, FeO or a combination of Fe₂O₃ and FeO. It is understood that in some aspects of both Fe⁺² and Fe⁺³ are present, the specific ratio can be determined based on the desired color. In yet other aspects, the ratio can also be affected by the potential presence of other ions, such as, for example and without limitations, alkali ions or other intermediates.

In yet other aspects, the composition can also comprise multiple valences of Mn, Cr, and/or Ni to achieve the desired color of the glass.

It is understood that iron oxides are often present in the batch products used to form the disclosed glass compositions. Without wishing to be bound by any theory, it was found that while the presence of up to 0.5 mol% of iron oxides in the conventional soda-lime silicate glasses results in edge-on-green coloration, the disclosed glass compositions are either substantially color free or show edge-on-color grey. In still further aspects, when the amount of ion oxides is higher than about 0.5 mol%, the glass composition takes on a translucent grey color. Yet in still further aspects, when the glass composition comprises up to about 10 mol% of iron oxide, such a composition becomes black. For example, the black composition can be defined by color coordinates, such as L* being from 20.0 to 40.0, a* being from - 1.0 to 1.0, and b* being from -5.0 to 2.0.

In still further aspects, the glass composition disclosed herein can comprise additional transitional metals in various concentrations. In certain aspects, additional transitional metals can be present as salts or oxides. In some aspects, the composition can further comprise one more transitional metal oxides comprising oxides of copper, nickel, cobalt, chromium, silver, tin, or any combination thereof. It is understood that any known valencies of such transitional metals can be present in the composition.

In certain aspects, the one or more transition metal oxides are present in an amount up to about 2 mol%, including exemplary values of about 0.01 mol%, about 0.05 mol%, about 0.1 mol%, about 0.15 mol%, about 0.2 mol%, about 0.25 mol%, about 0.3 mol%, about 0.35 mol%, about 0.4 mol%, about 0.45 mol%, about 0.5 mol%, about 0.55 mol%, about 0.6 mol%, about 0.65 mol%, about 0.7 mol%, about 0.75 mol%, about 0.8 mol%, about 0.85 mol%, about 0.9 mol%, about 0.95 mol%, about 1.0 mol%, about 1.05 mol%, about 1.1 mol%, about 1.15 mol%, about 1.2 mol%, about 1.25 mol%, about 1.3 mol%, about 1.35 mol%, about 1.4 mol%, about 1.45 mol%, about 1.5 mol%, about 1.55 mol%, about 1.6 mol%, about 1.65 mol%, about 1.7 mol%, about 1.75 mol%, about 1.8 mol%, about 1.85 mol%, about 1.9 mol%, and about 1.95 mol%.

In still further aspects, when the one or more transition metal ions are present, such a glass composition can obtain a specific color as desired.

In yet other aspects, the glass composition as described herein can be translucent. In yet further aspects, such exemplary and unlimited glass composition can exhibit a percent transmittance less than about 85%, less than about 80%, less than about 75%, less than about 70%, less than about 65%, less than about 60%, less than about 55%, or less than about 50% over a wavelength range of about 400 nm to about 800 nm, including the wavelengths of about 450 nm, about 500nm, about 550 nm, about 600 nm, about 650 nm, about 700 nm, and about 750 nm.

In still other aspects, when copper, silver, gold, and/or tin, and/or alloys thereof are present in the composition, such metals can be reduced to allow the development of nanoparticles within the formed glass. It is understood that in some aspects, tin can behave as a buffer to maintain the redox state of copper, silver, gold, and their alloys. In such exemplary aspects, the glass composition can comprise a plurality of nanoparticles. Without wishing to be bound by any theory, it is assumed that in such exemplary and unlimiting aspects, the disclosed herein a plurality of nanoparticles can provide coloration to the glass through the effect of surface plasmon resonance. In still further aspects, these nanostructures can be developed in post-formation UV and thermal treatments. In yet still further aspects, the glass composition can exhibit photochromicity.

In still further aspects, the glass composition disclosed herein can comprise one or more rare-earth metal compounds. Again, without wishing to be bound by any theory, it is assumed that the inclusion of rare-earth metals can further provide photoluminescence properties to the disclosed herein glass compositions. Such properties in certain aspects can be leveraged to produce laser host materials if desired. In still further aspects, the glass composition is photoluminescent.

In certain aspects, the one or more rare earth metal ions are present in an amount up to about 10 mol%, including exemplary values of about 0.01 mol%, about 0.05 mol%, about 0.1 mol%, about 0.5 mol%, about 1 mol%, about 1.5 mol%, about 2 mol%, about 2.5 mol%, about 3 mol%, about 3.5 mol%, about 4 mol%, about 4.5 mol%, about 5 mol%, about 5.5 mol%, about 6 mol%, about 6.5 mol%, about 7 mol%, about 7.5 mol%, about 8 mol%, about 8.5 mol%, about 9 mol%, and about 9.5 mol%.

Embodiments of our glass composition can provide glass that has been observed to have resistance to crystallization and, therefore, would allow the formation of various articles by any known in the art methods, such as, for example, and without limitation, down drawing (by either a slot draw or fusion draw process), fiber-drawing, float processing, or thin rolling the glass, and the like. In yet other aspects, the methods can comprise shaping the glass to any desired shape. Various shaping methods can also be used, such as casting, molding, pressing, rolling, floating, and the like. In yet further aspects, the articles disclosed herein can be formed by a float/flat glass press process, a press-and-blow process, a blow-and-blow process, or any combination thereof. Yet in still further aspects, the methods can also comprise glassblowing, hot casting, flameworking, kiln casting, and/or kiln forming. It is further understood that other low temperature glass-making methods can also be utilized. For example, and without limitations, glass wheel forming methods are also contemplated.

In still further aspects, the disclosed herein glass compositions are substantially free of carbonates. It is understood, however, that the batch material used to form the disclosed herein glass compositions can contain some amounts of carbonates.

In yet still further aspects, the glass composition disclosed herein exhibits a linear temperature expansion coefficient greater than about 80 × 10⁻⁷ K⁻¹, greater than about 90 × 10⁻⁷ K⁻¹, greater than about 100 × 10⁻⁷ K⁻¹, greater than about 110 × 10⁻⁷ K⁻¹ , greater than about 120 × 10⁻⁷ K⁻¹, greater than about 130 × 10⁻⁷ K⁻¹ , greater than or equal to about 140 × 10⁻⁷ K⁻¹.

It is understood that in some aspects, methods of machine forming of the disclosed herein glass compositions would need to be adjusted for lower temperature working range and reduced radiative heat flux loss. In some aspects, additional cooling could be needed during the glass transition. Yet in other aspects, longer annealing cycles can be used.

In still further aspects, the Vickers hardness of the disclosed herein glasses is dependent on the applied load. In some aspects, at certain loads (as shown in the Examples below) the disclosed herein glass compositions can exhibit Vickers hardness substantially equal to or less than Vickers hardness of a conventional soda-lime glass composition.

In still further aspects, any of the disclosed herein glass compositions can exhibit a crack resistance greater than a crack resistance of a conventional soda-lime glass composition.

It was surprisingly found that disclosed herein glass compositions possess significantly higher crack resistances (CR) compared to the conventional soda-lime. Crack resistance is defined as the force at which the corners of a Vickers indent have a 50% probability of producing cracks and can be thought of as the resistance of a material to crack initiation. It is a particularly important mechanical property for glasses, as it can be used to characterize the glass's damage resistance.

In still further aspects, the glass compositions disclosed herein can exhibit a crack resistance greater than about 0.1 kgf, greater than about 0.2 kgf, greater than about 0.3 kgf, greater than about 0.4 kgf, greater than about 0.5 kgf, greater than about 0.6 kgf, greater than about 0.7 kgf, greater than about 0.8 kgf, greater than about 0.9 kgf, or even greater than about 1.0 kgf.

### ARTICLES

In certain aspects, disclosed herein are articles comprising any of the disclosed above compositions. For example and without limitations, disclosed herein are articles comprising a glass composition comprising about 25 to about 55 mol% of P₂O₅; about 5 to about 45 mol% of SiO₂; about 5 to about 22 mol% of Al₂O₃; about 5 to about 30 mol% of ZnO; greater than 0 to about 20 mol% a total amount of Na₂O, K₂O, and/or Li₂O; about 2 to about 8 mol% of CaO, and/or about 2 to about 8 mol% of MgO.

In still further aspects, any of the disclosed above additional elements can be present in the glass compositions used to form the disclosed herein articles.

In certain aspects and as disclosed herein, depending on the amount of iron oxide present in the disclosed herein composition, the articles can be transparent or translucent depending on the desired applications. In yet still further aspects and as disclosed above, the articles can also be photoluminescent. It is further understood that other ions and elements can also affect the translucency of the article. For example, the translucence can be obtained by any of the disclosed above additives, including but not limited to, for example, by the addition of tin oxides.

In still further aspects, the articles can comprise any known in the art articles that require the disclosed herein mechanical, chemical, and optical properties. Yet in other aspects, the articles disclosed herein can comprise a hollowware, tableware, container, plate, sheet (including sheets prepared via the float process), cookware, powder, fiber, cones, spheres, blades, or any combination thereof. In still further aspects, the articles can comprise foodware, tableware, cookware, flat glass, windows, windshields, hollowware, jars, art and craft glass objects, laser host materials, optical fibers, hollow fibers, tubing fibers, lab-usable containers, or any combination thereof.

In still further aspects, the articles can be formed to both satisfy technological demands (high chemical resistance and durability, mechanical strength combined with low melting point, and the like) and artistic expression and aesthetic appearances. For example, and without limitations, the color of the articles can be controlled by changing the amount of iron oxide and/or amounts of one or more other transitional oxides to form the desired articles. Again, for example, and without limitations, articles having darker colors can be formed. In such aspects, the articles can comprise colored bottles (wine bottles, beer bottles, etc.), colored pharmaceutical vials/ampoules (to protect light-sensitive medicines), sunglass lenses, art or craft objects, and the like.

In still further aspects, the articles disclosed herein can be formed by any process. For example, the articles can be formed by a float or flat press process, a press-and-blow process, a fiber-drawing process, a blow-and-blow process, or any combination thereof. While in still further aspects disclosed herein, articles can also be used in a variety of electronic devices or portable computing devices, light diffusers, automotive, appliances, medical industry, food industry, and even architectural applications. In still further aspects, the articles disclosed herein can have any known in the art shape or configuration.

### METHODS

Also disclosed herein are methods of making the disclosed compositions and the disclosed articles. In certain aspects, disclosed herein is a method comprising: a) providing: about 25 to about 55 mol% of P₂O₅; about 5 mol% to about 45 mol% of SiO₂; about 5 mol% to about 22 mol% of Al₂O₃; about 5 mol% to about 30 mol% of ZnO; greater than 0 mol% to about 20 mol% a total amount of Na₂O, K₂O, and/or Li₂O; about 2 mol% to about 8 mol% of CaO, and/or about 2 mol% to about 8 mol% of MgO; b) forming a homogeneous mixture; c) melting the mixture at a temperature of about 1,000 °C to about 1,300 °C; and cooling the composition to form a glass composition.

In still further aspects, the glass composition is any of the disclosed above glass compositions. In yet still further aspects, the mixture can be melted at a temperature of about 1,000 °C to about 1,300 °C, including exemplary values of about 1,050 °C, about 1,100 °C, about 1,150 °C, about 1,200 °C, and about 1,250 °C.

In still further aspects, any of the disclosed above components and elements can also be present in the mixture prior to the melt.

In yet still further aspects, the plurality of nanoparticles can be formed during the melting and cooling process and present in the cooled article.

In still further aspects, the methods can further comprise forming any of the disclosed above articles.

In still further aspects, the glass compositions can exhibit any of the disclosed above characteristics and properties. In such exemplary aspects, these compositions can be transparent, translucent, or opaque depending on the specific percentage of each component and have any of the disclosed above color characteristics.

In still further aspects, embodiments of the methods of forming the disclosed herein glass compositions can provide at least about 25%, at least about 30%, at least about 35%, at least about 40%, at least about 45%, or at least about 50% reduction in CO₂ emission as compared to a reference method of making a conventional soda-lime glass composition. Such a reduction in CO₂ can be provided via lower melting points of the composition in some embodiments.

In still further aspects, the methods disclosed herein can require at least about 30% less, at least about 35% less, at least about 40% less, at least about 45% less, or at least about 50% less British Thermal Units (BTU) as compared to a conventional process for making a conventional soda-lime glass composition.

In still further aspects, the methods disclosed herein comprise a step of forming a glass article. Any known in the art methods of forming or shaping an article can be utilized. For example, and without limitation, the methods of forming a glass article disclosed herein can comprise down drawing (by either a slot draw or fusion draw process), fiber-drawing, float processing, or thin rolling of the glass. In yet other aspects, the methods can comprise shaping the glass to any desired shape. Various shaping methods can also be used, such as casting, molding, pressing, rolling, drawing, floating, and the like. In yet further aspects, the articles disclosed herein can be formed by a float/flat glass press process, a press-and-blow process, a blow-and-blow process, or any combination thereof. Yet in still further aspects, the methods can also comprise glassblowing, hot casting, flameworking, kiln casting, and/or kiln forming. It is further understood that other low temperature glass-making methods can also be utilized. For example, and without limitations, glass wheel forming methods are also contemplated.

### EXAMPLES

The following examples are put forth so as to provide those of ordinary skill in the art with a complete disclosure and description of how the compounds, compositions, articles, devices, and/or methods claimed herein are made and evaluated and are intended to be purely exemplary and are not intended to limit the disclosure. Efforts have been made to ensure accuracy with respect to numbers (*e.g.*, amounts, temperature, etc.), but some errors and deviations should be accounted for.

### EXAMPLE 1

Table 1 shows the comparative properties of the exemplary article formed according to the disclosure in one aspect and the soda-lime silicate article.

**Table 1. Comparison of properties of the articles formed from the soda-lime silicate reference composition and the exemplary composition disclosed herein in one aspect (LG2-CaMgZn in Table 9).**

| **Property** | **LG2-CaMgZn** | **Soda-Lime** |
|---|---|---|
| T_{g}(K) | 722 | 843 |
| CTE×10⁻⁷ (K⁻¹) | 64 | 91.7 |
| Density, (g/cm³) | 2.74 | 2.44 |
| Posson's ratio, v | 0.234 | 0.22 |
| Elastic Modulus, E (GPa) | 62.37 | 72 |
| Shear Modulus, G (GPa) | 25.28 | 30 |
| Bulk Modulus, K (GPa) | 39.12 | 43 |
| Vickers Hardness, HV | 474 HV 0.5 | |
| Crack Resistance (kgf) | 1.0 | 0.1 |

### EXAMPLE 2

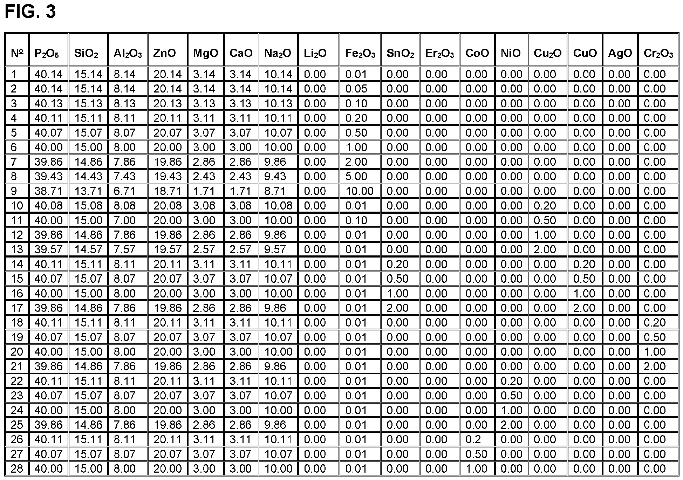

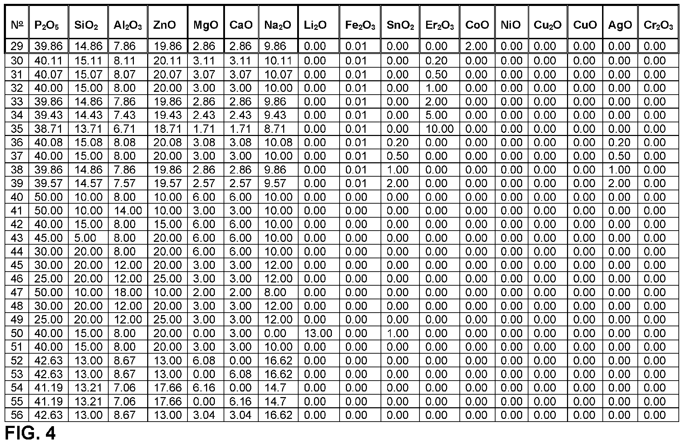

FIG. 3 and FIG. 4 as well as Table 2 below are tables that show exemplary and unlimiting glass compositions as formed according to this disclosure.

**Table 2. Composition of various glasses according to some aspects of the disclosure (mol%).**

| **Component** | **Glass 1** | **Glass 2** | **Glass 3** | **Glass 4** | **Glass 5** | **Glass 6** | **Glass 7** |
|---|---|---|---|---|---|---|---|
| CaO | 3.143 | 3.143 | 3.129 | 3.114 | 6 | 3 | 6 |
| Al₂O₃ | 8.143 | 8.143 | 8.129 | 8.114 | 8 | 14 | 8 |
| Na₂O | 10.14 | 10.14 | 10.13 | 10.11 | 10 | 10 | 10 |
| ZnO | 20.14 | 20.14 | 20.13 | 20.11 | 10 | 10 | 15 |
| MgO | 3.143 | 3.143 | 3.129 | 3.114 | 6 | 3 | 6 |
| SiO₂ | 15.14 | 15.14 | 15.13 | 15.11 | 10 | 10 | 15 |
| P₂O₅ | 40.14 | 40.14 | 40.13 | 40.11 | 50 | 50 | 40 |
| Fe₂O₃ | 0.01 | 0.02 | 0.1 | 0.2 | 0.00 | 0.00 | 0.00 |
| SnO₂ | 0.00 | 0.00 | 0.00 | 0.00 | 0.00 | 0.00 | 0.00 |
| Li₂O | 0.00 | 0.00 | 0.00 | 0.00 | 0.00 | 0.00 | 0.00 |

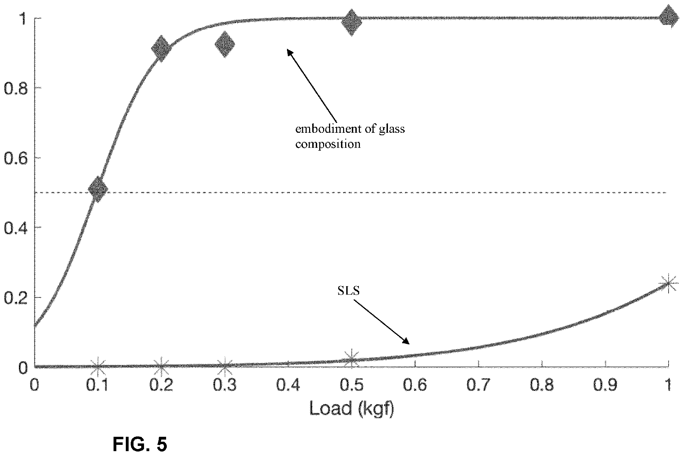

The probability of crack initiation (PCI) was evaluated for some of the exemplary embodiments shown in Table 2. Figure 5 illustrates the PCI as a function of load for a glass having the composition of the exemplary embodiment of the glass composition identified as "Glass1" in Table 2 and a conventional soda-lime glass (SLS).

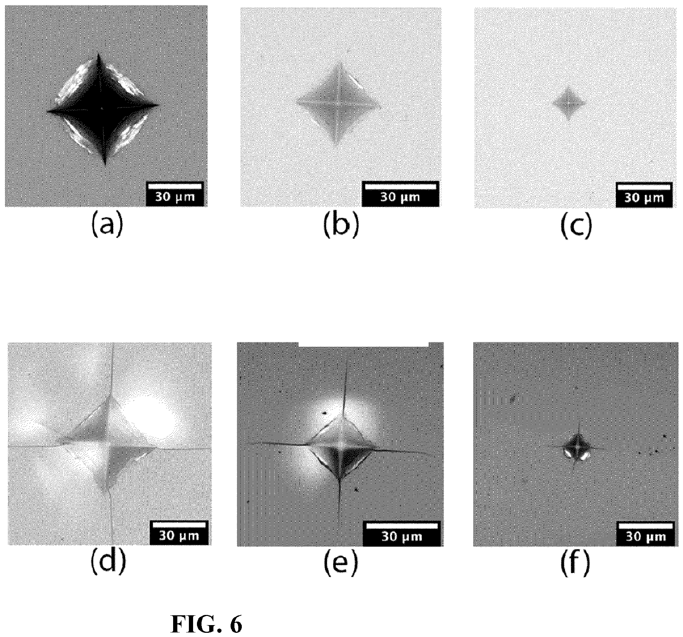

A series of photographs were taken during conducted experimental work to evaluate how the glass could withstand a load. Figure 6 includes multiple images that show indents made in a glass having the composition of the exemplary embodiment of the glass composition identified as "Glass1" in Table 2 in images (a), (b), and (c) and in a conventional soda-lime glass in the images (d), (e), and (f) in Figure 6. The load applied for the images (a) and (d) in Figure 6 was 1kgf, the load applied for images (b) and (e) in Figure 6 was 0.5 kgf and the load applied for the images (c) and (f) in Figure 6 was 0.1 kgf. The conducted testing showed that exemplary embodiments of the glass composition can be utilized to make glass that has a much greater ability to avoid cracking and withstand loading.

Table 3 shows glass compositions according to some aspects of the disclosure and a reference soda-lime silicate glass composition as disclosed in Ashby, M.F. Material profiles. In Materials and the Environment, 2nd ed.; Elsevier, 2013, pp. 459-595, in mol.%

**Table 3. Composition of various glasses according to some aspects of the disclosure and a soda-lime silicate composition for comparison (mol%).**

| **Comp** | **Glass 8** | **Glass 9** | **Glass 10** | **Glass 11** | **Glass 12** | **Glass 13** | **Glass 14** | **Soda-Lime** |
|---|---|---|---|---|---|---|---|---|
| CaO | 6 | 6 | 3 | 3 | 3 | 3 | 2 | 5 |
| Al₂O₃ | 8 | 8 | 12 | 12 | 8 | 8 | 18 | 1 |
| Na₂O | 10 | 10 | 12 | 12 | 10 | 0.00 | 8 | 17 |
| ZnO | 20 | 20 | 20 | 25 | 20 | 20 | 10 | 0.00 |
| MgO | 6 | 6 | 3 | 3 | 3 | 0.00 | 2 | 4 |
| SiO₂ | 5 | 20 | 20 | 20 | 15 | 15 | 10 | 73 |
| P₂O₅ | 45 | 30 | 30 | 25 | 40 | 40 | 50 | 0.00 |
| Fe₂O₃ | 0.00 | 0.00 | 0.00 | 0.00 | 0.00 | 0.00 | 0.00 | Trace |
| SnO₂ | 0.00 | 0.00 | 0.00 | 0.00 | 1 | 1 | 0.00 | 0.00 |
| Li₂O | 0.00 | 0.00 | 0.00 | 0.00 | 0.00 | 13 | 0.00 | 0.00 |

Table 4 exhibits the glass transition temperature (T_{g}) of the exemplary glass composition that was annealed at 700 K for one hour according to one aspect of the disclosure at four evenly distributed and slow heating rates (the values were calculated by using TransitionPy software).

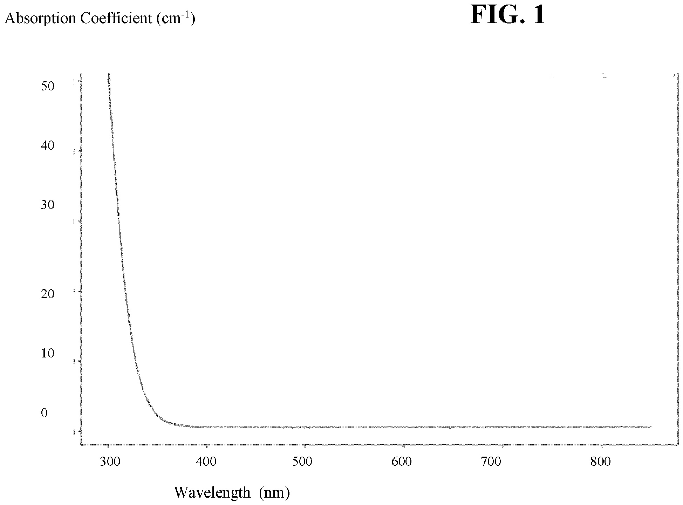

**FIG. 1** shows the absorption spectrum of the glass composition according to one aspect in the wavelength range of 300-850 nm.

**Table 4. Glass Transition Temperature as a function of heating rate (Glass 1 from FIG. 3)**

| **Heating Rate [K/min]** | **T_{g} (K)** |
|---|---|
| 10 | 722 ±12 |
| 20 | 727 ±15 |
| 40 | 732 ±16 |
| 60 | 735 ±16 |

Table 5 shows the thermal properties of Glass 1 measured via DSC at a heating rate of 10 K. min and subsequently analyzed using Transition Py software. The values are compared to soda-lime silicate glass found in Mancini, M., Sendova, M., and Mauro, J. C. Geometric analysis of the calorimetric glass transition and fragility using constant cooling rate cycles. JACerS [Online] 2021, 3, 348-357. https://ceramics.onlinelibrary.wiley.com/doi/10.1111/ijag.16073 and Henneberry, B. Thomas. All About Soda Lime Glass - Composition and Properties. https://www.thomasnet.eom/articles/plant-facility-equipment/soda-lime-glass/#table. The contents of which are incorporated herein in their full entirety.

**Table 5. Comparison of the exemplary glass composition in one aspect and soda-lime silicate glass. (Glass 1 from FIG. 3)**

| **Property** | **Glass 1** | **Soda-Lime** |
|---|---|---|
| T_{g}(K) | 722±12 | 843 |
| Cₚ(J/gK) | 2.439 | |
| H(J/K) | 660.576 | |
| Activation Barrier, E_{Tg}(ev) | 6.1±1.1 | 6±1.3 |
| Fragility Index, m | 43±7 | 36±5 |
| Relaxation Time@T_{g,} (s) | 71 | f |
| CTE×10⁻⁷ (K⁻¹) | 145 | 91.7 |
| Density, (g/cm³) | 2.74 | 2.44 |
| Posson's ratio, v | 0.26±0.02 | 0.22 |
| Elastic Modulus, E (GPa) | 60.3±4 | 72 |
| Shear Modulus, G (GPa) | 24.0±0.8 | 30 |
| Bulk Modulus, K (GPa) | 41.5±4 | 43 |
| Vickers Hardness, HV | 450±58 HV 0.5 | |

### EXAMPLE 3

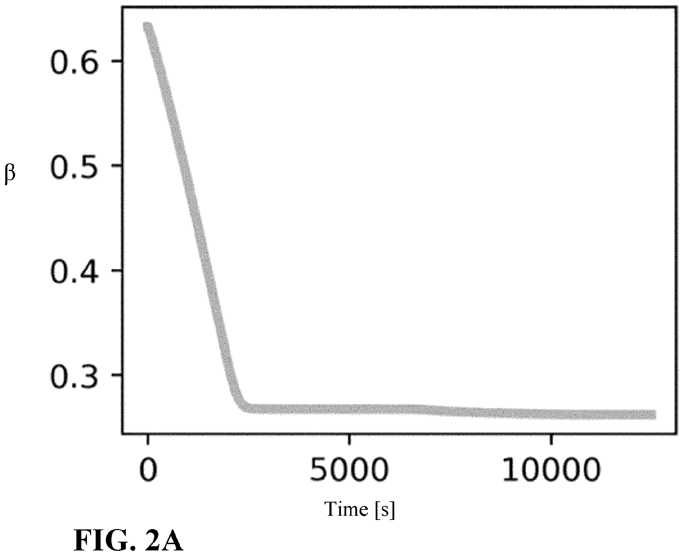

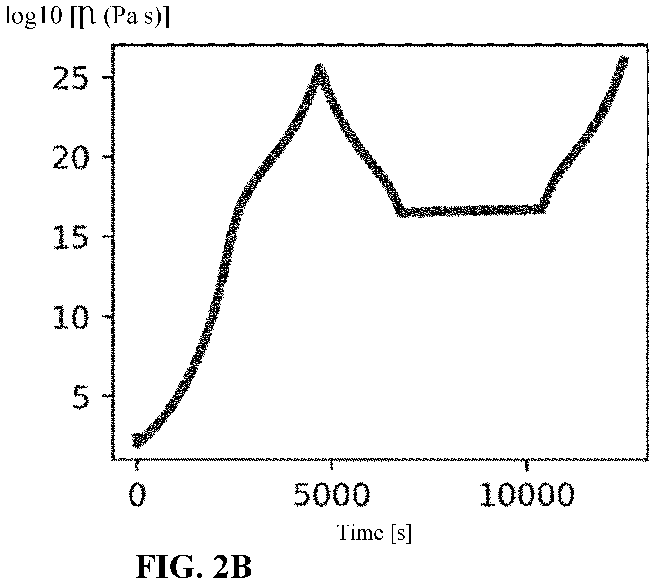

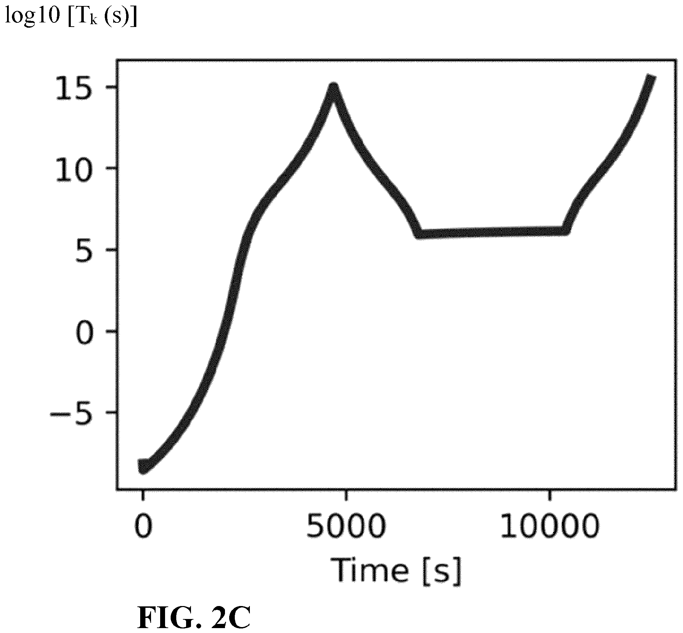

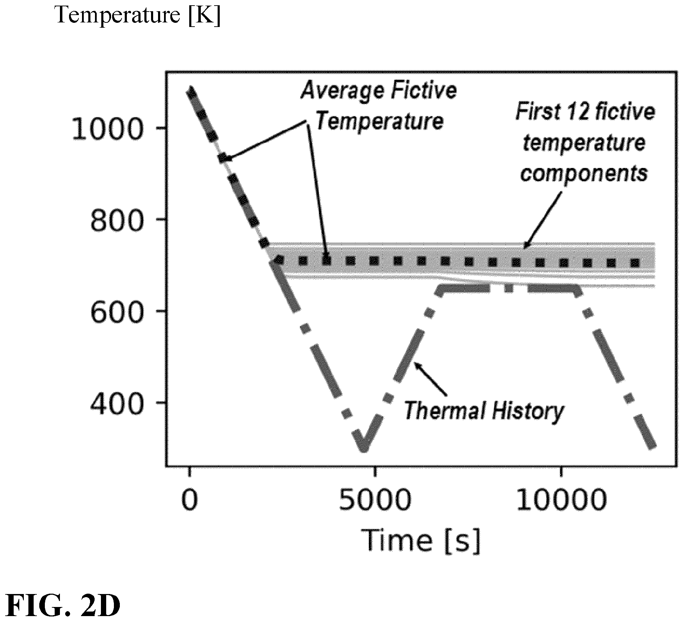

**FIGS. 2A-2D** show the relaxation behavior of the glass composition according to one aspect. In these exemplary plots, glass was melted at 1.5xTg, quenched at 10 °C/min to room temperature, and then reheated to 0.9xTg and held for one hour to allow relaxation. Stretching parameter beta evolution is shown in **Fig. 2A****.** **Fig. 2B** shows the viscosity evolution, while relaxation time evolution is shown in **Fig. 2C****.** **Fig. 2D** shows the thermal history of the simulation.

### EXAMPLE 4

Various glass compositions were evaluated to measure their linear temperature expansion coefficient (CTE), and the results are shown in Table 6.

**Table 6. CTE in units of × 10⁻⁷(K⁻¹) of various glasses.**

| Temperature Range (°C) | Glass 1 | Glass 8 | Glass 13 | Glass 52 | Glass 53 | Glass 54 | Glass 55 | Glass 56 |
|---|---|---|---|---|---|---|---|---|
| 50-300 | 120 | 122 | 102 | 114 | 128 | | 127 | 129 |
| 100-300 | 123 | 126 | 106 | 118 | 132 | 120 | 128 | 133 |
| 150-300 | 127 | 128 | 110 | 123 | 135 | 123 | 132 | 137 |
| 200-300 | 130 | 130 | 115 | 127 | 140 | 127 | 136 | 140 |
| 250-300 | 132 | 133 | 120 | 129 | 146 | 130 | 142 | 144 |

### EXAMPLE 5

The glasses disclosed herein were further evaluated for hardness, and the results are shown in Table 7.

**Table 7 Vickers Indentation Hardness in units of kgf/mm² of various glasses.**

| **Comp. Load (kgf)** | **Glass 1** | **Glass 5** | **Glass 8** | **Glass 9** | **Glass 13** | **Glass 52** | **Glass 53** | **Glass 54** | **Glass 56** | **Soda-Lime** |
|---|---|---|---|---|---|---|---|---|---|---|
| 1 | 406±8 | 455±13 | 434±18 | 440t9 | 468±9 | 574±36 | 548±30 | 509±21 | 477±19 | 615±43 |
| 0.5 | 422±10 | 481±23 | 446±22 | 457±10 | 499±17 | 604±94 | 511±35 | 497±38 | 458±21 | 631±55 |
| 0.3 | 460±37 | 483±16 | 470±15 | 470±12 | 520±18 | 597±72 | 501±39 | 489±42 | 469±20 | 629±57 |
| 0.2 | 446±42 | 521±22 | 502±22 | 481±15 | 573±20 | 571±56 | 523±43 | 550±39 | 519±22 | 691±17 |
| 0.1 | | 594±30 | 540±27 | 530±36 | 643±59 | 719±142 | 703±91 | 628±106 | 562±29 | 752±60 |

### EXAMPLE 6

The glass compositions disclosed herein have shown surprisingly exceptional crack resistance. Some of the glass compositions (as shown in Table 9) had such a great crack resistance that the glasses would not crack under the application of a 1kgf load. It was found that this force was not high enough to generate 50% cracking. This data indicates these glasses are over 10x as resistant to cracking as standard soda-lime. Without wishing to be bound by any theory, it was hypothesized that the overall ZnO content can play an important role in increasing crack resistance. The measured crack resistance for exemplary glasses is shown in Table 8.

**Table 8. Crack Resistance**

| **Glass 1** | **Glass 5** | **Glass 8** | **Glass 9** | **Glass 13** | **Glass 52** | **Glass 53** | **Glass 54** | **Glass 56** | **Soda-Lime** |
|---|---|---|---|---|---|---|---|---|---|
| >1.0 kgf | 0.66 kgf | 0.19 kgf | 0.74 kgf | >1.0 kgf | 0.15 kgf | 0.1 kgf | 0.24 kgf | <0.1 kgf | 0.1 kgf |

### EXAMPLE 7

Table 9 shows exemplary and unlimiting glass compositions as formed according to this disclosure. Tables 10-14 show durability, hardness, coefficient of thermal expansion (CTE) measurement data, elastic properties, and Tg data for different exemplary embodiments for exemplary glass compositions identified in Table 9.

**Table 9. Composition of various glasses according to some aspects of the disclosure. (mol%)**

| **Sample** | **SiO₂** | **P₂O₅** | **Al₂O₃** | **CaO** | **MgO** | **ZnO** | **Fe₂O₃** | **Na₂O** | **K₂O** |
|---|---|---|---|---|---|---|---|---|---|
| LG2.1 | 15.55 | 41.13 | 7.97 | 13.39 | 0 | 21.74 | 0 | 0 | 0 |
| LG2.2 | 10.53 | 40.76 | 6 | 23.2 | 3.9 | 15.56 | 0 | 0 | 0 |
| LG2.3 | 8.44 | 41.39 | 4.49 | 24.87 | 6.25 | 14.55 | 0 | 0 | 0 |
| LG2.4 | 10.22 | 38.66 | 7.75 | 22.57 | 8.22 | 12.57 | 0 | 0 | 0 |
| LG2.5 | 8.55 | 40.89 | 4.33 | 19.23 | 6.57 | 20.09 | 0 | 0 | 0 |
| LG2.6 | 10 | 40 | 7 | 21.5 | 0 | 21.5 | 0 | 0 | 0 |
| LG2.7 | 10 | 40 | 7 | 43 | 0 | 0 | 0 | 0 | 0 |
| LG2T-Ca | 9 | 42.75 | 5.5 | 42.75 | 0 | 0 | 0 | 0 | 0 |
| LG2T-Mg | 9 | 42.75 | 5.5 | 0 | 42.75 | 0 | 0 | 0 | 0 |
| LG2T-CaMg | 9 | 42.75 | 5.5 | 21.38 | 21.38 | 0 | 0 | 0 | 0 |
| LG2T-CaZn | 9 | 42.75 | 5.5 | 21.38 | 0 | 21.38 | 0 | 0 | 0 |
| LG2T-MgZn | 9 | 42.75 | 5.5 | 0 | 21.38 | 21.38 | 0 | 0 | 0 |
| LG2T-CaMgZn | 9 | 42.75 | 5.5 | 14.25 | 14.25 | 14.25 | 0 | 0 | 0 |
| LG2T-Zn | 9 | 42.75 | 5.5 | 0 | 0 | 42.75 | 0 | 0 | 0 |
| LG2.8 | 9 | 43 | 5 | 43 | 0 | 0 | 0 | 0 | 0 |
| LG2.9 | 13 | 35 | 2 | 0 | 25 | 25 | 0 | 0 | 0 |
| LG2.10 | 13 | 50 | 2 | 0 | 10 | 25 | 0 | 0 | 0 |
| LG2.11 | 13 | 45 | 6 | 6 | 10 | 20 | | 0 | 0 |
| LG2.12 | 5 | 45 | 8 | 11 | 11 | 20 | 0 | 0 | 0 |
| LG2.14 | 5 | 50 | 10 | 3 | 7 | 25 | 0 | 0 | 0 |
| LG2.15 | 15 | 45 | 5 | 10 | 10 | 15 | 11 | 0 | 0 |
| LG2.16 | 9 | 40 | 5.5 | 14.5 | 14.5 | 14.5 | 2 | 0 | 0 |
| LG2.17 | 9 | 40 | 5.5 | 14.84 | 14.83 | 14.83 | 1 | 0 | 0 |
| LG2.18 | 9 | 40 | 5.5 | 15.17 | 15.17 | 15.17 | 0 | 0 | 0 |
| LG2.19 | 9 | 42.75 | 5.5 | 14.25 | 14.25 | 4.25 | 0 | 0 | 10 |
| LG2.20 | 9 | 42.75 | 5.5 | 14.25 | 14.25 | 4.25 | 0 | 10 | 0 |

**Table 10. Durability**

| **Example** | **Al norm. Loss (µmol/mL)** | **Ca norm. Loss (µmol/mL)** | **Mg norm. Loss (µmol/mL)** | **P norm. Loss (µmol/mL)** | **Si norm. Loss (µmol/mL)** | **Zn norm. Loss (µmol/mL)** |
|---|---|---|---|---|---|---|
| LG2T-Ca | 1.58 | 2.36 | | 2.35 | 2.86 | |
| LG2T-Mg | 46.84 | | 256.71 | 248.97 | 339.39 | |
| LG2T-CaMg | 3.27 | 5.02 | 5.38 | 4.98 | 5.71 | |
| LG2T-CaZn | 40.27 | 1.35 | | 304.97 | 433.19 | 149.35 |
| LG2T-MgZn | 64.93 | | 1.84 | 299.73 | 398.44 | 176.44 |
| LG2T-CaMgZn | 65.14 | 3.92 | 2.71 | 300.48 | 399.71 | 176.66 |
| LG2.12 | 2.43 | | 3.68 | 3.42 | 6.31 | 2.73 |
| LG2.14 | 28.92 | 162.78 | 188.40 | 119.43 | 206.40 | 108.06 |

**Table 11. Hardness**

| **Example** | **HV 0.05 (kgf/mm ²)** | **HV 0.1 ((kgf/m m²)** | **HV 0.2 (kgf/mm ²)** | **HV 0.3 (kgf/mm ²)** | **HV 0.5 (kgf/mm ²)** | **HV 1 (kgf/mm ²)** | **Crack Resist. (kgf)** |
|---|---|---|---|---|---|---|---|
| LG2T-Ca | | 491 | 475 | 478 | 444 | 460 | 110.02 |
| LG2T-Mg | 521 | 507 | 424 | 424 | 429 | 402 | >1 |
| LG2T-CaMg | 680 | 548 | 486 | 486 | 474 | 470 | 0.083 |
| LG2T-CaZn | 463 | 431 | 390 | 390 | 374 | 349349 | 0.801 |
| LG2T-MgZn | | 509 | 455 | 455 | 435 | 404 | 1.03 |
| LG2T-CaMgZn | 656 | 677 | 500 | 500 | 474 | 443 | 1 |

**Table 12 CTE Measurements (x10-') (50-300 °C)**

| **Example** | **Average CTE** |
|---|---|
| LG2.3 | 88.23 |
| LG2.5 | 78.89 |
| LG2T-Ca | 93 |
| LG2T-Mg | 61 |
| LG2T-CaMg | 73 |
| LG2T-CaZn | 64 |
| LG2T-MgZn | 75 |
| LG2T-CaMgZn | 64 |
| LG2T-Zn | 66 |
| LG2.12 | 72.79 |
| LG2.14 | 66.87 |
| LG2.15 | 71.89 |

**Table 13 Elastic Properties**

| **Example** | **Density (g/cm³)** | **E (Gpa)** | **G (Gpa)** | **K (Gpa)** | **Poisson Ratio** |
|---|---|---|---|---|---|
| LG2T-Ca | 112.65 | 63.0718731 | 25.1119804 | 43.0493065 | 0.25581699 |
| LG2T-Mg | 2.444 | 58.6940989 | 23.5730391 | 38.3663579 | 0.24496794 |
| LG2T-CaMg | 2.575 | 62.6929007 | 25.1682397 | 41.0575736 | 0.24549152 |
| LG2T-CaZn | 2.627 | 53.332786 | 21.4684482 | 34.4704274 | 0.24210357 |
| LG2T-MgZn | 2.751 | 56.857336 | 22.6493186 | 38.7047892 | 0.25516622 |
| LG2T-CaMgZn | 2.739 | 62.3770531 | 25.2801757 | 39.1218793 | 0.23383111 |
| LG2.12 | 112.741 | 64.500958 | 25.7675508 | 43.3023823 | 0.25153334 |
| LG2.14 | 112.689 | 56.224967 | 23.0368739 | 33.5850653 | 0.22061488 |
| LG2.15 | 2.623 | 57.3764151 | 23.0961113 | 37.0909727 | 0.24215278 |

**Table 14 Tg**

| **Example** | **Tg(C)** |
|---|---|
| LG2T-Ca | 563 |
| LG2T-Mg | 11587 |
| LG2T-CaMg | 11577 |
| LG2T-CaZn | 11495 |
| LG2T-MgZn | 11520 |
| LG2T-CaMgZn | 449 |

Thermal shock can occur when a large amount of stress is generated during cooling, and results in the glass cracking. If a glass has a high expansion coefficient, a high Young's modulus, and/or a high glass transition temperature, more stress can be generated during cooling. The exemplary compositions identified in Table 9 had a significantly lower thermal expansion coefficient than most soda-lime glass, while also possessing a low Young's modulus and low glass transition temperature. These embodiments can also exhibit higher thermal shock resistance than most soda lime glasses.

The durability of the different exemplary glass compositions identified in Table 9 were tested and the results of such testing are shown in Table 10. The testing showed durability of the exemplary compositions of Table 9 were very good and comparable, if not better, to a conventional soda lime glass.

The numbers in the above Table 10 are the concentration of each element that was present in the solution after the same particle size and total surface area of glass was exposed to 62 mL of RO water at 75°C for 2 days in a sealed reaction vessel. A glass with higher durability will therefore have a lower concentration of dissolved ions in the solution. The surface area of some glasses with poor durability likely changes during the test, so the results are not normalized by the surface area.

Some glasses that were tested had such low durability that they degraded in air and were not tested. This most often occurred when the phosphorus exceeded 45 mol% while the alumina content was low, and/or if the zinc content was high.

In general, the conducted testing showed that CaO can greatly enhance durability. Substituting CaO with MgO decreased durability and substituting ZnO for CaO decreased durability even more than MgO.

We believe small additions of alkali oxide in place of MgO or ZnO can provide enhanced durability without compromising crack resistance, which can have a trade-off with durability.

Crack resistance can depend on the modifiers used for the tested exemplary glass compositions identified in Table 9. Exceptionally high crack resistance (1kgf or higher) can be obtained in compositions that had reduced ZnO (e.g., low ZnO) or had no ZnO. Removing or reducing ZnO can provide some advantages for different embodiments because ZnO can decrease durability relative to using CaO and MgO and is also one of the more expensive batch materials. Some ZnO can still be useful to obtain other desired properties (e.g., high UV absorption). But the conducted testing showed that an avoidance or lowering of ZnO can permit the glass to have high crack resistance.

Stones are another word for un-melted batch in the glass, and whose presence typically indicates higher temperatures or longer melting times are needed for forming glass. For example, stones can be unmelted silica particles which have clumped together. The composition of glass can be adjusted to reduce stones by reducing the Al₂O₃ content, increasing the P₂O₅ content, and/or reducing the SiO₂ content.

Calcining the batch of raw material at at least 300°C was found to help improve the melt quality of the glass that was subsequently formed in some of the conducted experimentation as reflected in Tables 9-14. Stones and melt quality were found to be strongly controlled by the alumina content, with as much as 0.25 mol% Al₂O₃ difference making the difference between a high-quality glass and a glass with lots of stones when melted at the same temperature.

We also performed additional testing on other glass compositions that showed embodiments of our glass composition could be made and used in glass articles. Below Tables 15 and 16 provide information on the compositions for these additional exemplary embodiments. The compositions in Table 16 are compositions after the glass material was melted to form glass. The compositions listed in Table 15 are compositions pre-melting of the material to form the glass.

**Table 15 Composition of various exemplary glasses compositions (mol%)**

| **Sample** | **SiO₂** | **P₂O₅** | **Al₂O₃** | **CaO** | **MgO** | **ZnO** | **Na₂O** | **K₂O** |
|---|---|---|---|---|---|---|---|---|
| LG2-Ca.2 | 5.67 | 44.3 | 5.67 | 44.3 | 0 | 0 | 0 | 0 |
| LG2-Ca.3 | 2.93 | 45.6 | 5.87 | 45.6 | 0 | 0 | 0 | 0 |
| LG2-Ca.4 | 0 | 46.98 | 6.06 | 46.98 | 0 | 0 | 0 | 0 |
| LG2-Ca.5 | 9.52 | 42.32 | 2.9 | 45.23 | 0 | 0 | 0 | 0 |
| LG2-Ca.6(N) | 9.42 | 42.21 | 2.87 | 36.37 | 0 | 0 | 9.11 | 0 |
| LG2-Ca.6(NZ) | 9.48 | 41.98 | 2.88 | 26.57 | 0 | 9.95 | 9.14 | 0 |
| LG2-Ca.6(KZ) | 9.48 | 41.98 | 2.88 | 26.57 | 0 | 9.95 | 0 | 9.14 |
| LG2-Ca.6(NZM) | 9.49 | 41.79 | 2.89 | 25.21 | 3 | 8.81 | 8.81 | 0 |
| LG2-Ca.6 | 9.46 | 41.76 | 2.89 | 24.9 | 2.83 | 8.51 | 8.52 | 1.13 |
| LG2-Ca.61 | 9.57 | 41.09 | 2.9 | 22.94 | 2.87 | 8.62 | 8.61 | 3.38 |
| LG2-Ca.62 | 9.47 | 41.18 | 2.8 | 24.07 | 2.88 | 8.67 | 8.66 | 2.27 |
| LG2-Ca.63 | 9.68 | 41.04 | 2.86 | 23.45 | 2.94 | 8.85 | 8.85 | 2.32 |
| LG2-Ca.64 | 11.11 | 40.93 | 2.97 | 23.36 | 2.91 | 8.77 | 8.77 | 1.16 |
| LG2-Ca.65 | 9.61 | 41.39 | 3.51 | 24.16 | 2.88 | 8.65 | 8.65 | 1.15 |
| LG2-Ca.66 | 9.63 | 41.48 | 3.3 | 24.22 | 2.88 | 8.67 | 8.67 | 1.14 |
| LG2-Ca.67 | 9.65 | 41.55 | 3.13 | 24.26 | 2.89 | 8.69 | 8.68 | 1.5 |
| LG-Ca.71 | 9.59 | 41.69 | 3.31 | 24.12 | 11.51 | 0 | 8.6 | 1.14 |
| LG2-Ca.72 | 9.72 | 41.11 | 3.16 | 24.44 | 5.83 | 5.83 | 8.74 | 1.16 |
| LG2-Ca.73 | 9.45 | 41.36 | 3.02 | 25.42 | 7.74 | 3.38 | 8.51 | 1.13 |
| LG2-Ca.74 | 9.48 | 41.49 | 2.69 | 25.51 | 7.76 | 3.39 | 8.53 | 1.13 |
| LG2-Ca.71T | 9.63 | 41.63 | 3.26 | 24.22 | 10.42 | 1.01 | 8.57 | 1.14 |
| LG2-Ca.75 | 9.46 | 42.39 | 2.09 | 25.28 | 9.71 | 1.18 | 8.58 | 1.32 |

**Table 16 Composition of various exemplary glasses compositions (mol%)**

| **Sample** | **SiO₂** | **P₂O₅** | **Al₂O₃** | **CaO** | **MgO** | **ZnO** | **Na₂O** | **K₂O** |
|---|---|---|---|---|---|---|---|---|
| LG2-Ca.65 | 9.8 | 39.7 | 4.0 | 25.2 | 3.20 | 8.2 | 8.5 | 1.3 |
| LG2-Ca.71 | 9.5 | 39.8 | 3.8 | 24.7 | 12.0 | 0.04 | 8.8 | 1.26 |
| LG2-Ca.72 | 9.55 | 39.5 | 3.8 | 24.7 | 6.3 | 5.5 | 9.2 | 1.3 |
| LG2-Ca.6 | 9.6 | 40.3 | 3.34 | 25.7 | 3.1 | 8.17 | 8.56 | 1.25 |
| LG2-Ca.6Na | 9.5 | 39.88 | 5.36 | 35.98 | 0.33 | 0.1 | 8.8 | 0.064 |
| LG2-Ca.6NZ | 9.6 | 40 | 5.49 | 26.6 | 0.29 | 9.2 | 8.7 | 0.046 |
| LG2-Ca.6NZM | 9.7 | 40 | 4.38 | 25.7 | 3.25 | 8.2 | 8.5 | 0.15 |
| LG2-Ca.61 | 9.7 | 39.8 | 3.62 | 23.7 | 3.1 | 8.2 | 8.47 | 3.3 |
| LG2-Ca.5 | 9.5 | 40.02 | 4.96 | 45 | 0.07 | 0.14 | 0.06 | 0.14 |
| LG2-Ca.6KZ | 9.5 | 39.8 | 5.96 | 26.8 | 0.25 | 9.1 | 0.20 | 8.25 |

Our experimental work related to the compositions of Tables 15 and 16 showed that some compositions of the glass made from glass making material may different slightly based on the contamination that may occur in the vessel or furnace in which glass may be melted and formed. Due to such factors, the melted compositions may vary slightly from the pre-melt composition depending on how the glass is made. For example, in the compositions of Table 16, the compositions were melted in a crucible that was made of Al₂O₃ and the presence of this alumina altered the pre-melt composition slightly (decrease of P₂O₅ that may be due to volatilization from the melting process and an increase of Al₂O₃).

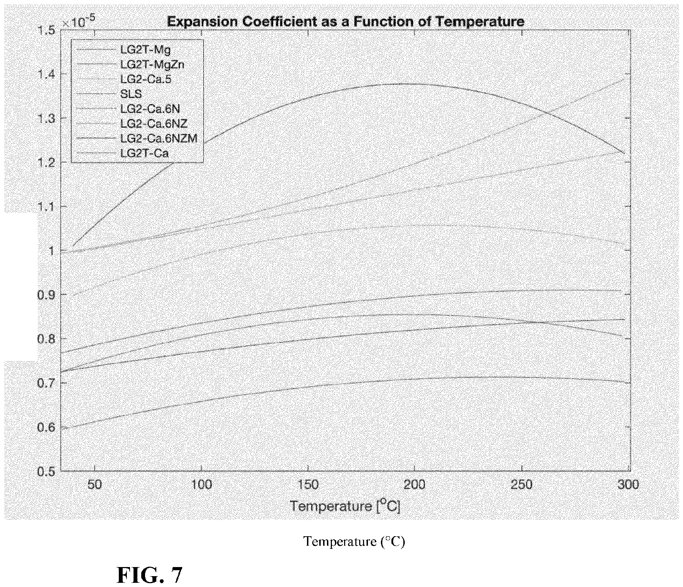

Figure 7 a graph that shows how coefficient of thermal expansion (CTE) varies as a function of temperature for several exemplary embodiments of glass compositions included in Table 16 as compared to a conventional soda-lime glass (SLS). As can be appreciated from Figure 7, embodiments of the glass composition can used to form glass that can have substantially lower CTE values for a broad range of temperatures as compared to the conventional soda-lime glass (SLS).

A single-pass flow-through (SPFT) evaluation was also performed in experimental work to compare a soda-lime glass (SLS) with different exemplary embodiments of the glass composition. The dissolution rate of a given glass component is expected to be inversely related to the concentration of the component in the solution, e.g. the dissolution rate of sodium from a glass will decrease as the sodium content of the solution increases, as well as by so-called "back-reactions". SPFT is a dynamic durability technique which measures the release rate of different components of a glass under several solution flow rates. These different flow rates create different background concentrations of the species of interest within the reaction vessel. The relationship between the flow rate and the dissolution rate is used to calculate what the dissolution rate would be in the case of zero background concentration, i.e. without the presence of back-reactions or an influence of the background concentration. This dissolution rate, referred to as the forward dissolution rate, is an estimation of the release rate of each component of the glass at the moment the glass comes in contact with fresh solution, and is one of the most direct ways to compare the durabilities of different glass compositions. The forward dissolution rates are further normalized by the composition of the glass to allow for direct comparison of different compositions, i.e. without normalization, a glass with twice as much Na₂O would be expected to show twice as much release of Na into the solution while having effectively the same durability. Additional information about SPFT can be found in ASTM C1662-10. Below is Table 17, which provides results from this evaluation work. The elements Al, Ca, K, Mg, Na, P, Si, and Zn included in Table 17 identify the different elements in the glass composition and how those elements were found to dissolve during testing. The forward dissolution rates are given in grams per square meters per day. The tests were conducted at 50°C in RO water. Glass frit, having an average particle size of 362.5 µm (-300,+425 µm mesh) was used in the experiment. Using the geometric surface area approach, each vessel contained approximately 1.38×10⁻⁷ m² of glass. The influent solution was buffered to pH 7.5 using tris-HCl to remove the effects of variations in pH on the dissolution measurements. The forward dissolution rates of different glass compositions often span many orders of magnitude with a strong dependence on the solution environment. To illustrate this point comparison, the forward dissolution rates for a soda-lime glass (taken from M. Fournier et al. / Journal of Nuclear Materials 476 (2016) 140e154) and a borosilicate glass (taken from Neeway, J., Williams, B., Asmussen, R., Leavy, I., Parruzot, B., Stephenson, J., Cordova, E., & Mcelroy, E. (2017). FY2016 ILAW Glass Corrosion Testing with the Single-Pass Flow-Through Method. available at https://www.pnnl.gov/main/publications/external/technical_reports/PNNL-26169.pdf) under different conditions are included in Table 17. Under identical conditions, the results from this experimental work indicate that the example glass compositions possessed reasonably comparable durability suitable for commercial applications (e.g. durability that is not outside of what could be observed in other types of conditions).

**Table 17 SPFT Evaluation Results**

| Forward Dissolution Rate (g/m²/day) | **LG2-Ca.6** | **LG2-Ca.74** | **SLS** |
|---|---|---|---|
| Al | 1.797 | 2.54 | 0.012 |
| Ca | 2.185 | 2.87 | 0.011 |
| K | 2.308 | 3.16 | |
| Mg | 2.738 | 3.03 | |
| Na | 2.326 | 2.58 | 0.04 |
| P | 2.162 | 2.98 | |
| Si | 1.994 | 2.6 | 0.002 |
| Zn | 1.351 | 1.39 | |

The conducted experimentation shows that a glass composition can include between about 1.5 mole percent (mol%) alumina (Al₂O₃) and 5 mol% Al₂O₃ and between 5 mol% silica (SiO₂) and 45 mol% SiO₂ to provide surprising results. For example, a glass composition can include between 1.5 mol% mol% Al₂O₃ and 4 mol% Al₂O₃ or can include between 2 mol% Al₂O₃ and 3.6 mol% Al₂O₃ or can include between 2.8 mol% Al₂O₃ and 3.3 mol% Al₂O₃. In such exemplary embodiments, the silica content can range from between 5 mol% silica (SiO₂) and 15 mol% SiO₂ (e.g., can be between 5 mol% SiO₂ and 10 mol% SiO₂, be between 5 mol% SiO₂ and 12 mol% SiO₂, or be between 7 mol% SiO₂ and 15 mol% SiO₂, etc.).

As can be appreciated from the above, embodiments of the glass composition can also include other components that can facilitate one or more desired properties for the glass or for forming an article from the glass. For example, the glass composition can also include phosphorus pentoxide (P₂O₅). Phosphorus pentoxide can be added to the glass composition by use of phosphate compounds for the forming of the glass having the glass composition. For instance, monosodium phosphate, monocalcium phosphate, aluminum metaphosphate, and/or dimagnesium phosphate can be added to the glass raw materials to be used to form the glass so that the glass has a glass composition with a desired content of P₂O₅ (e.g., a content of P₂O₅ that is within a pre-selected compositional range for P₂O₅ or at a pre-selected P₂O₅ content). Use of these types of phosphate compounds can permit the glass to be formed without use of carbonate modifiers (e.g., CaCOs, Na₂CO₃, etc.) to help reduce the direct carbon footprint for the raw materials used for making the glass having a pre-selected desired glass composition. In some embodiments, the glass composition can include between less than 55 mol% P₂O₅ and greater than 35 mol% P₂O₅. For instance, the glass composition can include a P₂O₅ content of between 38 mol% P₂O₅ and 50 mol% P₂O₅ or a P₂O₅ content of between 40 mol% P₂O₅ and 45 mol% P₂O₅.

The conducted experimentation also shows that embodiments of the glass composition can include other components to help provide desired properties for the glass. For example, embodiments of the glass composition can also include one or more modifiers (e.g., alkali modifiers and alkali-earth modifiers). In some embodiments, the glass composition can include a total content of the modifiers in a range of between 40 mol% and 47 mol% (e.g., the entire sum content of all such modifiers included in the glass composition can range between 40 mol% and 47 mol%). In other embodiments, the glass composition can include a total content of the modifiers in a range of between 30 mol% and 40 mol% or around 35 mol% (e.g., the entire sum content of all such modifiers included in the glass composition can range between 30 mol% and 40 mol% or be between 33 mol% and 37 mol%, etc.).

For example, one or more modifiers can be included in the glass composition to help provide one or more properties for the glass composition, which can help the glass be more effective for use in making a particular type of article. For instance, Cao and/or K₂O can be utilized as modifiers to help improve the durability of glass having the glass composition. Glass compositions that may have a relatively low Al₂O₃ content, can have a higher CaO content and/or a higher content of K₂O, for example. In some embodiments, the glass composition can have a CaO content of greater than or equal to 22 mol% CaO (and no more than 47 mol% CaO or no more than 40 mol% CaO).

In some embodiments, K₂O can be less than or equal to 10 mol% in the glass composition. In such a range, the glass can be clear (e.g., avoid opacity) and we have found that this type of composition range can help avoid phase separation.

In some embodiments, Na₂O can preferably be no more than 20 mol% of the glass composition. We have found that an Na₂O content of over 20 mol% can result in the glass being opaque and/or being degradable at ambient conditions in some situations.

MgO, ZnO, and/or CaO can be utilized in the glass composition to help provide a glass that is transparent and durable. For instance, inclusion of CaO can help increase the Vickers hardness of the glass having the glass composition. We have found that glass compositions that were divalent-free often resulted in formation of opaque glass or glass that may degrade in air or in ambient conditions so many preferred embodiments can include one or more divalent modifiers.

We have also found that modifiers that have relatively high field strength (e.g., Na₂O, MgO, and ZnO) can help provide high crack resistance to the glass having the glass composition. In contrast, the inclusion of CaO and/or K2O can reduce the crack resistance for the glass composition. For embodiments of the glass composition in which a high crack resistance is desired, the glass composition can preferably have about 10 mol% CaO (e.g., between 8 mol% CaO and 12 mol% CaO), and between 15 mol% and 30 mol% ZnO and/or MgO (e.g., the content of ZnO and MgO can total between 15 mol% and 30 mol%).

The modifiers can be selected to help with coloration and other qualities as well. For example, the alkali content of the glass composition in some embodiments can be no more than 14 mol% alkali to help avoid phase separation and avoid a glass that may be blue (e.g., sky blue) or white in color. Having an alkali content of around 10 mol% in some embodiments can permit the glass to be compatible with various different resistance melting techniques used for making the glass. Examples of alkali modifiers include Na₂O and K₂O.

Iron oxide (Fe₂O₃), can be utilized in a relatively small amount as a modifier to help raise durability and increase liquidus viscosity without detrimentally affecting clarity of the formed glass or processability of the glass. Some embodiments of the glass composition can include greater than 0 mol% Fe₂O₃ and less than 0.5 mol% Fe₂O₃.

The inclusion of ZnO and MgO can have similar effects on properties of glass having the glass composition. Both of these modifiers can be utilized to help increase crack resistance, but may provide such crack resistance at the cost of durability (e.g. durability may decrease while still be sufficient for a particular set of design objectives while the crack resistance may be increased).

A higher alkali modifier content and lower alkali earth modifier content can result in a higher thermal expansion coefficient for the glass as compared to glass having a lower alkali modifier content and a greater alkali earth modifier content. The combination of which modifiers to utilize for a particular application can be refined within the above noted content ranges to provide a desired glass composition for a glass article that can have a desired thermal expansion coefficient for a particular application (e.g., use in forming a particular type of article).

In some embodiments, a glass composition that includes the modifiers and P₂O₅ can be a glass composition having between 9 mol% and 10 mol% SiO₂ (e.g., 9.4-9.5 mol% SiO₂), between 40 mol% and 42 mol% P₂O₅ (e.g., 41.5-42 mol% P₂O₅), between 2.8 mol% and 3.2 mol% Al₂O₃ (e.g., 2.85-3 mol% Al₂O₃, between 24.5 mol% and 26 mol% CaO (e.g., 24.7-25.3 mol% CaO), between 2.7 mol% and 3.0 mol% MgO (e.g., 2.8-2.9 mol% MgO), between 8.4 mol% and 8.7 mol% ZnO (e.g., 8.5-8.8 mol% ZnO), between 8.2 mol% and 8.8 mol% Na₂O (e.g., 8.4-8.6 mol% Na₂O), and between 1.0 mol% and 1.3 mol% K₂O (e.g., 1.08-1.2 mol% K₂O). As another example, an embodiment of the glass composition can include 9.46 mol% SiO₂, 41.76 mol% P₂O₅, 2.89 mol% Al₂O₃, 24.90 mol% CaO, 2.83 mol% MgO, 8.52 mol% ZnO, 8.51 mol% Na₂O, and 1.13 mol% K₂O.

As yet another example, an embodiment of the glass composition including modifiers can have 8-11 mol% SiO₂, 40-43 mol% P₂O₅, 1.5-3 mol% Al₂O₃, 20-50 mol% of modifiers in which the modifiers can include a combination of CaO, MgO, ZnO, Na₂O, and/or K₂O. As yet another example, an embodiment of the glass composition including modifiers can have 7-12 mol% SiO₂, 40-45 mol% P₂O₅, 1.5 mol%-4 mol% Al₂O₃, 30-50 mol% of modifiers in which the modifiers include one or more of: CaO, MgO, ZnO, Na₂O, and/or K₂O. As yet another example, an embodiment of the glass composition including the modifiers can have 9-10 mol% SiO₂, 39-43 mol% P₂O₅, 1-4 mol% Al₂O₃, and 43-51 mol% other constituents. The other constituents can include CaO, MgO, Na₂O, and/or K₂O.

Yet other embodiments of a glass composition can have between 9 mol% and 10 mol% SiO₂, between 40 mol% and 42 mol% P₂O₅, between 2 mol% and 4 mol% Al₂O₃, between 20 mol% and 26 mol% CaO (e.g., 24.7-25.3 mol% CaO), between 2 mol% and 6.0 mol% MgO (e.g., 2.8-2.9 mol% MgO), between 0 mol% and 9 mol% ZnO, between 0 mol% and 9 mol% Na₂O, and between 0 mol% and 1.5 mol% K₂O. As yet another example, the glass composition can have between 8 mol% and 11 mol% SiO₂, between 38 mol% and 42 mol% P₂O₅, between 1 mol% and 4 mol% Al₂O₃, between 15 mol% and 30 mol% CaO, and between 15 mol% and 30 mol% MgO. Some such embodiments can also include between 5 mol% and 10 mol% Na₂O, and between 1.0 mol% and 1.5 mol% K₂O.

As yet another example, the glass composition can have between 7 mol% and 13 mol% SiO₂, between 38 mol% and 44 mol% P₂O₅, between 1.5 mol% and 4 mol% Al₂O₃, between 15 mol% and 30 mol% CaO, between 15 mol% and 30 mol% MgO and no more than 5 mol% ZnO (e.g. 0-5 mol% ZnO, less than 3 mol% ZnO and more than 0 mol% ZnO, etc.).

As yet another example, an embodiment of the glass composition can have 9-10 mol% SiO₂, 41-42 mol% P₂O₅, 2.5-3.8 mol% Al₂O₃, 20-30 mol% CaO, 2-30 mol% MgO, 0-10 mol% ZnO, 0-9 mol% Na₂O, and 0-1.5 mol% K₂O. As yet another example, an embodiment of the glass composition can have 9-10 mol% SiO₂, 39-43 mol% P₂O₅, 1 mol%-4 mol% Al₂O₃, 15-30 mol% CaO, 0-30 mol% MgO, 0-10 mol% ZnO, 0-10 mol% Na₂O, and 0-1.5 mol% K₂O.

For instance, an embodiment of the glass composition including modifiers can have 9-10 mol% SiO₂, 39.0-42.5 mol% P₂O₅, 2.0 mol%-4.0 mol% Al₂O₃, 20-27 mol% CaO, 6-30 mol% MgO, 0.5-5 mol% ZnO, 0.5-9 mol% Na₂O, and 0.5-1.5 mol% K₂O. As yet another example, an embodiment of the glass composition including modifiers can have 8-12 mol% SiO₂, 39.0-42.5 mol% P₂O₅, 2.0 mol%-4.0 mol% Al₂O₃, 20-27 mol% CaO, 6-30 mol% MgO, 0.5-5 mol% ZnO, 0.5-9 mol% Na₂O, and 0.5-1.5 mol% K₂O. As yet another example, an embodiment of the glass composition including modifiers can have 8-12 mol% SiO₂, 39-43 mol% P₂O₅, 1-4 mol% Al₂O₃, 5-25 mol% CaO, 5-30 mol% MgO, 4-8 mol% Na₂O, and 0.5-1.5 mol% K₂O, and 0-0.5 mol% Fe₂O₃.

Embodiments of the glass composition can also include additional modifiers (e.g. Li₂O etc.) and/or coloring agents.

In view of the described processes and compositions, hereinbelow are described certain more particularly described aspects of the inventions. However, these particularly recited aspects should not be interpreted to have any limiting effect on any different claims containing different or more general teachings described herein or that the "particular" aspects are somehow limited in some way other than the inherent meanings of the language and formulas literally used therein.

### ASPECTS:

Aspect 1: A glass composition comprising: about 25 to about 55 mol% of P₂O₅; about 5 to about 45 mol% of SiO₂; about 5 to about 22 mol% of Al₂O₃; about 5 to about 30 mol% of ZnO; greater than 0 to about 20 mol% a total amount of Na₂O, K₂O, and/or Li₂O; about 2 to about 8 mol% of CaO, and/or about 2 to about 8 mol% of MgO.

Aspect 2: The glass composition of Aspect 1, wherein the glass composition exhibits a melting point of at least about 150 °C less than the melting point of a conventional soda-lime silicate glass composition.

Aspect 3: The glass composition of Aspect 1 or 2, wherein the glass composition exhibits a melting point of at least about 250 °C less than the melting point of a conventional soda-lime silicate glass composition.

Aspect 4: The glass composition of any one of Aspects 1-3, wherein the glass composition exhibits a melting point of less than about 1,400 °C.

Aspect 5: The glass composition of any one of Aspects 1-4, further comprising Fe₂O₃ in an amount up to about 10 mol%.

Aspect 6: The glass composition of Aspect 5, wherein when Fe₂O₃ is present up to about 0.5 mol%, the glass composition is substantially color-free.

Aspect 7: The glass composition of Aspect 6, wherein the composition exhibits an absorption coefficient average over the visible range of about 400 to about 800 nm less than or equal to about 0.49 cm⁻¹.

Aspect 8: The glass composition of Aspect 6 or 7, wherein the glass composition exhibits a percent transmittance greater than about 80% over a wavelength range of about 400 nm to about 800 nm.

Aspect 9: The glass composition of Aspect 5, wherein when Fe₂O₃ is present in an amount of about 0.5 mol% to about 5 mol%, the glass composition is translucent grey.

Aspect 10: The glass composition of any one of Aspects 1-5, further comprising one or more transitional metal oxides comprising oxides of copper, nickel, cobalt, chromium, silver, tin, or any combination thereof.

Aspect 11: The glass composition of Aspect 10, wherein the one or more transition metal oxides are present in an amount up to about 2 mol%.

Aspect 12: The glass composition of Aspect 11, wherein the glass composition is translucent.

Aspect 13: The glass composition of Aspect 11 or 12, wherein the glass composition exhibits a percent transmittance less than about 85% over a wavelength range of about 400 nm to about 800 nm.

Aspect 14: The glass composition of any one of Aspects 10-13, wherein the glass composition comprises a plurality of nanoparticles.

Aspect 15: The glass composition of any one of Aspects 1-14, wherein the glass composition comprises one or more rare earth metal ions.

Aspect 16: The glass composition of Aspect 15, wherein the one or more rare earth metal ions are present in an amount up to about 10 mol%.

Aspect 17: The glass composition of Aspect 15 or 16, wherein the glass composition is photoluminescent.

Aspect 18: The glass composition of any one of Aspects 1-17, wherein the composition exhibits a difference between the crystallization temperature and the glass transition temperature greater than about 100 °C when measured at room temperature and ambient pressure.

Aspect 19: The glass composition of any one of Aspects 1-18, wherein the glass composition is substantially free of carbonates.

Aspect 20: The glass composition of any one of Aspects 1-19, wherein the glass composition exhibits a linear temperature expansion coefficient greater than about 100 x 10⁻⁷ K⁻¹.

Aspect 21: The glass composition of any one of Aspects 1-20, wherein the glass composition exhibits a crack resistance greater than about 0.1 kgf.

Aspect 22: The glass composition of any one of Aspects 1-21, wherein the glass composition exhibits a crack resistance greater than about 0.3 kgf.

Aspect 23: The glass composition of any one of Aspects 1-22, wherein the glass composition exhibits a crack resistance greater than about 0.6 kgf.

Aspect 24: The glass composition of any one of Aspects 1-23, wherein the glass composition exhibits a crack resistance greater than about 1.0 kgf.

Aspect 25: An article comprising the glass composition of any one of Aspects 1-24.

Aspect 26: The article of Aspect 25, comprising foodware, tableware, cookware, flat glass, windows, windshields, hollowware, jars, art and craft glass objects, laser host materials, optical fibers, hollow fibers, lab-usable containers, or any combination thereof.

Aspect 27: A glass article comprising a glass composition comprising about 25 to about 55 mol% of P₂O₅; about 5 to about 45 mol% of SiO₂; about 5 to about 22 mol% of Al₂O₃; about 5 to about 30 mol% of ZnO; greater than 0 to about 20 mol% a total amount of Na₂O, K₂O, and/or Li₂O; about 2 to about 8 mol% of CaO, and/or about 2 to about 8 mol% of MgO.

Aspect 28: The article of Aspect 27, wherein the glass composition exhibits a melting point of at least about 150 °C less than the melting point of a conventional soda-lime silicate glass composition.

Aspect 29: The article of Aspect 27 or 28, wherein the glass composition exhibits a melting point at least about 250 °C less than the melting point of a conventional soda-lime silicate glass composition.

Aspect 30: The article of any one of Aspects 27-29, wherein the glass composition exhibits a melting point of less than about 1,400 °C.

Aspect 31: The article of any one of Aspects 27-30, wherein the glass composition further comprises Fe₂O₃ in an amount up to about 10 mol%.

Aspect 32: The article of Aspect 31, wherein when Fe₂O₃ is present up to about 0.5 mol%, the article is substantially color-free.

Aspect 33: The article of Aspect 32, wherein the composition displays an absorption coefficient average over the visible range of about 400 to about 800 nm less than or equal to about 0.49 cm⁻¹.

Aspect 34: The article of Aspect 32 or 33, wherein the article exhibits a percent transmittance greater than about 80% over a wavelength range of about 400 nm to about 800 nm.

Aspect 35: The article of Aspect 34, wherein when the glass composition comprises Fe₂O₃ present in an amount of about 0.5 mol% to about 5 mol%, the article is translucent grey.

Aspect 36: The article of any one of Aspects 27-31, further comprising one or more transitional metal oxides comprising oxides of copper, nickel, cobalt, chromium, silver, tin, or any combination thereof.

Aspect 37: The article of Aspect 36, wherein the one or more transition metal oxides are present in the glass composition in an amount up to about 2 mol%.

Aspect 38: The article of Aspect 37, wherein the article is translucent.

Aspect 39: The article of any one of Aspects 37-38, wherein the article exhibits a percent transmittance less than about 85% over a wavelength range of about 400 nm to about 800 nm.

Aspect 40: The article of any one of Aspects 36-39, wherein the glass composition comprises a plurality of nanoparticles.

Aspect 41: The article of any one of Aspects 27-40, wherein the glass composition comprises one or more rare earth metal ions.

Aspect 42: The article of Aspect 41, wherein the one or more rare earth metal ions are present in an amount up to about 10 mol%.

Aspect 43: The article of any one of Aspects 41 or 42, wherein the article exhibits photoluminescence.

Aspect 44: The article of any one of Aspects 27-43, wherein the glass composition exhibits a difference between the crystallization temperature and the glass transition temperature greater than about 100 °C when measured at room temperature and ambient pressure.

Aspect 45: The article of any one of Aspects 27-44, wherein the glass composition is substantially free of carbonates.

Aspect 46: The article of any one of Aspects 27-45, wherein the glass composition exhibits a linear temperature expansion coefficient greater than 100 x 10⁻⁷ K⁻¹.

Aspect 47: The article of any one of Aspects 27-46, wherein the glass composition exhibits a crack resistance greater than about 0.1 kgf.

Aspect 48: The article of any one of Aspects 27-47, wherein the glass composition exhibits a crack resistance greater than about 0.3 kgf.

Aspect 49: The article of any one of Aspects 27-48, wherein the glass composition exhibits a crack resistance greater than about 0.6 kgf.

Aspect 50: The article of any one of Aspects 27-49, wherein the glass composition exhibits a crack resistance greater than about 1.0 kgf.

Aspect 51: The article of any one of Aspects 27-50, comprising foodware, tableware, cookware, a flat glass, windows, windshields, hollowware, jars, art and craft glass objects, laser host materials, optical fibers, hollow fibers, tubing fibers, lab-usable containers, or any combination thereof.

Aspect 52: A method comprising: a) providing: about 25 mol% to about 55 mol% of P₂O₅; about 5 mol% to about 45 mol% of SiO₂; about 5 mol% to about 22 mol% of Al₂O₃; about 5 mol% to about 30 mol% of ZnO; greater than 0 mol% to about 20 mol% a total amount of Na₂O, K₂O, and/or Li₂O; about 2 mol% to about 8 mol% of CaO, and/or about 2 mol% to about 8 mol% of MgO; b) forming a homogeneous mixture; c) melting the mixture at a temperature of about 1,000 °C to about 1,300 °C; and cooling the composition to form the glass composition of any one of Aspects 1-26.

Aspect 53: The method of Aspect 52, wherein the method further comprises forming an article comprising the glass composition.

Aspect 54: The method of any one of Aspects 52 or 53, wherein the method exhibits at least about 25% reduction in CO₂ emission as compared to a reference method of making a conventional soda-lime glass composition.

Aspect 55: The method of any one of Aspects 52-54, wherein the method comprisesing requiring at least about btu as compared to a reference method of making a conventional soda-lime glass composition.

Aspect 56. A glass composition comprising 35-50 mol% of P₂O₅, 5-15 mol% of SiO₂ and 1.5-5 mol% of Al₂O₃ (e.g., 38-45 mol% P₂O₅, 5-10 mol% SiO₂ and 2.8-3.3 mol% Al₂O₃ or 40-45 mol% P₂O₅, 7-12 mol% SiO₂ and 2.0-3.8 mol% Al₂O₃ or 2-4 mol% Al₂O₃).

Aspect 57. The glass composition of Aspect 56 wherein there is 40-45 mol% P₂O₅. and 2-4 mol% Al₂O₃ in the glass composition.

Aspect 58. The glass composition of Aspect 56 or Aspect 57, also including 30-50 mol% of a total amount of CaO, MgO, Na₂O, K₂O, and ZnO (e.g., 40-47 mol% or 35-45 mol%).

Aspect 59. The glass composition of Aspect 56, Aspect 57, or Aspect 58, wherein K₂O is less than or equal to 10 mol%.

Aspect 60. The glass composition of Aspect 56, Aspect 57, Aspect 58, or Aspect 59, wherein the Na2O is less than or equal to 20 mol% or is less than or equal to 15 mol%.

Aspect 61. The glass composition of Aspect 56, Aspect 57, Aspect 58, Aspect 59, or Aspect 60, wherein the CaO is at least 20 mol% or at least 22 mol% and is no more than 40 mol% CaO or is no more than 30 mol% CaO.

Aspect 62. The glass composition of Aspect 56, Aspect 57, Aspect 58, Aspect 59, Aspect 60, or Aspect 61, wherein the glass composition also includes more than 0 mol% Fe₂O₃ and no more than 0.5 mol% Fe₂O₃ and/or has between 0 mol% of iron oxide (e.g., Fe₂O₃ and FeO) and 2 mol% of iron oxide.

Aspect 63. The glass composition of Aspect 56, Aspect 57, Aspect 58, Aspect 59, Aspect 60, Aspect 61, or Aspect 62, wherein the glass composition has a total amount of alkali that is no more than 14 mol%.

Aspect 64. The glass composition of Aspect 56, Aspect 57, Aspect 58, Aspect 59, Aspect 60, Aspect 61, Aspect 62, or Aspect 63, wherein a total amount of MgO and ZnO is greater than 0 mol% and no more than 30 mol%.

Aspect 65. The glass composition of Aspect 56, Aspect 57, Aspect 58, Aspect 59, Aspect 60, Aspect 61, Aspect 62, Aspect 63, or Aspect 64, wherein the glass composition has no more than 9 mol% ZnO or has 0 mol% ZnO (e.g., is between 0 mol% ZnO and 9 mol% ZnO or wherein the glass composition is substantially free of ZnO).

Aspect 66. The glass composition of Aspect 56, Aspect 57, Aspect 58, Aspect 59, Aspect 60, Aspect 61, Aspect 62, Aspect 63, Aspect 64, or Aspect 65, wherein the glass composition is substantially free of alkali oxides.

Aspect 67. The glass composition of Aspect 56, Aspect 57, Aspect 58, Aspect 59, Aspect 60, Aspect 61, Aspect 62, Aspect 63, Aspect 64, or Aspect 65, wherein the glass composition has up to 10 mol% of a total amount of alkali oxides.

Aspect 68. The glass composition of Aspect 56, Aspect 57, Aspect 58, Aspect 59, Aspect 60, Aspect 61, Aspect 62, Aspect 63, Aspect 64, Aspect 65, Aspect 66, or Aspect 67, wherein the glass composition also includes one or more transitional metal oxides comprising oxides of copper, nickel, cobalt, chromium, silver, tin, or any combination thereof.

Aspect 69. The glass composition of Aspect 56, Aspect 57, Aspect 58, Aspect 59, Aspect 60, Aspect 61, Aspect 62, Aspect 63, Aspect 64, Aspect 65, Aspect 66, Aspect 67, or Aspect 68, wherein the glass composition exhibits a melting point of less than about 1,300 °C or less than about 1,200 °C.

Aspect 70. The glass composition of Aspect 56, Aspect 57, Aspect 58, Aspect 59, Aspect 60, Aspect 61, Aspect 62, Aspect 63, Aspect 64, Aspect 65, Aspect 66, Aspect 67, Aspect 68, or Aspect 69, wherein the glass composition exhibits a glass transition temperature of about 485 °C to about 600 °C.

Aspect 71. The glass composition of Aspect 56, Aspect 57, Aspect 58, Aspect 59, Aspect 60, Aspect 61, Aspect 62, Aspect 63, Aspect 64, Aspect 65, Aspect 66, Aspect 67, Aspect 68, Aspect 69 or Aspect 70, wherein the glass composition exhibits a Young's modulus of about 50 GPa to about 65 GPa, an expansion coefficient of about 50 x 10⁻⁷ C⁻¹ to about 95 x 10⁻⁷ C⁻¹, exhibits a Vickers hardness of about 330 kgf/mm² to about 480 kgf/mm² at a load of 1 kgf, and/or exhibits a crack resistance under a Vickers diamond microindenter of at least 0.4 kgf (e.g., at least 0.8 kgf, greater than about 1 kgf, between 0.8 kgf to 1kgf, between 0.4 kgf and 1 kgf, etc.).

Aspect 72. An article comprising the glass composition of any one of Aspects 56-71. For example, the article can be a type of foodware, tableware, cookware, flat glass, windows, windshields, hollowware, jars, art and craft glass objects, laser host materials, optical fibers, hollow fibers, or lab-usable containers.

Aspect 73. A method of making glass that includes (a) providing raw material for forming a glass composition of any of Aspects 56-71 and forming a homogeneous mixture of the raw material, (b) melting the mixture at a temperature of about 1,000 °C to less than or equal to about 1,300 °C; and (c) cooling the composition to form the glass composition.

The claims are not intended to include, and should not be interpreted to include, means-plus- or step-plus-function limitations unless such a limitation is explicitly recited in a given claim using the phrase(s) "means for" or "step for," respectively.

It is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, article, glass, glass composition, and methods of making and using the same have been shown and described above, it is to be distinctly understood that the invention is not limited thereto but may be otherwise variously embodied and practiced within the scope of the following claims.

## Claims

1. A glass composition comprising 35 - 50 mol% of P₂O₅, 5-15 mole percent (mol%) of SiO₂ and 1.5 - 5 mol% of Al₂O₃.

2. The glass composition of claim 1, wherein the glass composition has 40 - 45 mol% of P₂O₅ and 2 - 4 mol% of Al₂O₃.

3. The glass composition of claim 1 or claim 2, also including 30 - 50 mol% of a total amount of CaO, MgO, Na₂O, K₂O, and ZnO.

4. The glass composition of claim 1, claim 2, or claim 3, wherein K₂O is less than or equal to 10 mol%.

5. The glass composition of claim 1, claim 2, claim 3, or claim 4, wherein Na₂O is less than or equal to 20 mol% or is less than or equal to 15 mol%.

6. The glass composition of claim 1, claim 2, claim 3, claim 4, or claim 5, wherein CaO is at least 20 mol% and is no more than 40 mol%.

7. The glass composition of claim 1, claim 2, claim 3, claim 4, claim 5, or claim 6, wherein the glass composition also includes more than 0 mol% Fe2O3 and no more than 0.5 mol% Fe2O3.

8. The glass composition of claim 1, claim 2, claim 3, claim 4, claim 5, claim 6, or claim 7, wherein the glass composition has a total amount of alkali oxide that is no more than 14 mol%.

9. The glass composition of claim 1, claim 2, claim 3, claim 4, claim 5, claim 6, claim 7, or claim 8, wherein a total amount of MgO and ZnO is greater than 0 mol% and no more than 30 mol%.

10. The glass composition of claim 1, claim 2, claim 3, claim 4, claim 5, claim 6, claim 7, claim 8, or claim 9 wherein the glass composition is substantially free of ZnO.

11. The glass composition of claim 1, claim 2, claim 3, claim 4, claim 5, claim 6, claim 7, claim 8, claim 9, or claim 10, wherein the glass composition is substantially free of alkali oxides.

12. The glass composition of claim 1, claim 2, claim 3, claim 4, claim 5, claim 6, claim 7, claim 8, claim 9, or claim 10, wherein the glass composition has up to 10 mol% of a total amount of alkali oxides.

13. The glass composition of claim 1, claim 2, claim 3, claim 4, claim 5, claim 6, claim 7, claim 8, claim 9, claim 10, claim 11, or claim 12, wherein the glass composition also includes one or more transitional metal oxides comprising oxides of copper, nickel, cobalt, chromium, silver, tin, or any combination thereof.

14. The glass composition of claim 1, claim 2, claim 3, claim 4, claim 5, claim 6, claim 7, claim 8, claim 9, claim 10, claim 11, claim 12, or claim 13, wherein the glass composition has one or more of:
the glass composition exhibits a melting point of less than 1,300 °C,
the glass composition exhibits a glass transition temperature of about 449 °C to about 600 °C;
the glass composition exhibits a Young's modulus of about 50 GPa to about 65 GPa,
the glass composition exhibits an expansion coefficient of about 50 x 10⁻⁷ C⁻¹ to about 95 x 10⁻⁷ C-1,
the glass composition exhibits a Vickers hardness of about 330 kgf/mm² to about 480 kgf/mm² at a load of 1 kgf, and/or
the glass composition exhibits a crack resistance under a Vickers diamond microindenter of at least 0.4 kgf.

15. An article comprising the glass composition of any one of claims 1-14.

16. A method of making glass comprising:
(a) providing raw material for forming a glass composition of any of claims 1 - 14 and forming a homogeneous mixture of the raw material,
(b) melting the mixture at a temperature of about 1,000 °C to less than or equal to about 1,300 °C; and
(c) cooling the composition to form the glass composition.
